(19) Europäisches Patentamt
European Patent Office
Office européen des brevets

(11) **EP 3 863 926 B1**

(12) **EUROPÄISCHE PATENTSCHRIFT**

(45) Veröffentlichungstag und Bekanntmachung des Hinweises auf die Patenterteilung:
**22.06.2022 Patentblatt 2022/25**

(21) Anmeldenummer: **20761817.4**

(22) Anmeldetag: **25.08.2020**

(51) Internationale Patentklassifikation (IPC):
**B64D 10/00** (2006.01)

(52) Gemeinsame Patentklassifikation (CPC):
**B64D 10/00; B64D 2010/002**

(86) Internationale Anmeldenummer:
**PCT/EP2020/073772**

(87) Internationale Veröffentlichungsnummer:
**WO 2021/043640 (11.03.2021 Gazette 2021/10)**

(54) **BESCHLEUNIGUNGS-SCHUTZHOSE**

ACCELERATION PROTECTION TROUSERS

PANTALON ANTI-ACCÉLÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA TN**

(30) Priorität: **04.09.2019 CH 11152019**
**03.04.2020 CH 4042020**

(43) Veröffentlichungstag der Anmeldung:
**18.08.2021 Patentblatt 2021/33**

(73) Patentinhaber: **Beyeler, Patrick G.**
**1273 Arzier le Muids (CH)**

(72) Erfinder: **Beyeler, Patrick G.**
**1273 Arzier le Muids (CH)**

(74) Vertreter: **Felber, Josef et al**
**Felber & Partner AG**
**Dufourstrasse 116**
**8008 Zürich (CH)**

(56) Entgegenhaltungen:
**DE-A1-102007 053 236     US-A1- 2008 275 291**

**Beschreibung**

Die vorliegende Erfindung betrifft eine Beschleunigungs-Schutzhose oder kurz G-Schutzhose genannt, anstelle eines üblichen ganzen G-Anzuges für die Besatzung von Hochleistungsflugzeugen.

Beim Kurvenflug können hohe Beschleunigungskräfte auftreten. Das bedeutet für den Organismus des Piloten bei positiven g-Kräften entlang der Vertikalachse, dass das Blut aus den oberen Regionen des Körpers nach unten absackt. Hierbei muss das Herz für eine ausreichende Blut- und somit Sauerstoffversorgung des Gehirns und der Augen eine grössere Leistung erbringen. Sind jedoch dessen - individuell unterschiedliche - Kapazitätsgrenzen überschritten, kann es durch die Sauerstoffunterversorgung zu Einschränkungen der Sehfähigkeit (Tunnelblick, Greyout) oder gar zu einer völligen Bewusstlosigkeit (Blackout) (engl.: *g-induced loss of consciousness - G-LOC*) und somit zu einem Missionsabbruch und/oder zu Unfällen kommen. Hohe g-Kräfte treten beispielsweise bei Flugrennen, beim Kunstflug und bei militärischen Flugprofilen (Luftkampf, Abfangmanöver nach Waffeneinsätzen usw.) auf. Bis zu einem bestimmten Grad können Luftfahrzeugbesatzungen die negativen Effekte hoher g-Belastung unterdrücken oder verzögern. Neben einem entsprechenden Training erreichen sie dies zum Beispiel durch gezielte Muskelanspannung oder Pressatmung. Unterstützt werden diese Massnahmen durch technische Lösungen wie geneigt eingebauten Sitzen, Pressbeatmung mit sauerstoffangereicherter Luft und Anti-g-Anzügen bzw. einer Kombination aus diesen Möglichkeiten. Letztlich lassen sich Einschränkungen in der Leistungs- und Handlungsfähigkeit und eine schnelle Erschöpfung jedoch nicht völlig verhindern.

G-Schutzanzüge sind in verschiedenen Ausführungen bekannt. Sie werden unterschieden in solche, die mit Luft als Druckfluid beaufschlagt werden, also sogenannte pneumatische G-Schutzanzüge und solche, die nach dem hydrostatischen Prinzip arbeiten, und entweder direkt den hydrostatischen Druck auf den Träger des Schutzanzuges einwirken lassen, oder solchen Anzügen, die mit Flüssigkeitsadern versehen sind, welche im Wesentlichen in der lokalen und momentanen Z-Achse verlaufen und durch Verkürzung des Umfanges des Schutzanzuges um die Körper-Gliedmassen den Binnendruck entsprechend der Flüssigkeitssäule erhöhen. Diese werden beide vereinfachend hydrostatische G-Schutzanzüge genannt, obwohl die Flüssigkeit keineswegs auf Wasser beschränkt ist. Bekannte G-Schutzanzüge gehen etwa aus der EP 1 755 948 hervor, als dem wohl nächstliegenden Stand der Technik, ferner aus US 2007/0289050, JP 2008 012 958 und DE 10 2007 053 236. Desweiteren ist ein G-Schutzanzug aus WO2012/066114A1 bekannt geworden.

In solchen G-Schutzanzügen werden in aller Regel die zu schützenden Körperregionen und/oder Körperteile vom G-Schutzanzug oder Teilen davon umgeben. Die durch die oft extremen Beschleunigungen besonders beanspruchten Körperteile und -Regionen werden dabei innerhalb solcher G-Schutzanzüge durch mit Druckluft oder -Gas beaufschlagte Blasen oder Schläuche in Abhängigkeit der Beschleunigungen in der momentanen und lokalen Z-Achse, $G_Z$ genannt, unter Druck gesetzt, womit dem hämostatischen Druck des Piloten entgegengewirkt wird. Dieses ist die allgemeine Aufgabe solcher G-Schutzanzüge.

Der Aufwand für einen hinreichenden G-Schutz ist mit herkömmlichen Anzügen immer noch beträchtlich und es ist eine Stossrichtung dieser Erfindung, diesen Aufwand vorallem dadurch zu reduzieren, dass ein hinreichender G-Schutz allein mit einer G-Schutzhose anstelle eines kompletten Anzuges erzielt wird. Diese G-Schutzhose soll einen hinreichenden G-Schutz für Anwendungen bieten, die bis zu etwa einem Drittel des gesamten einschlägigen Marktes ausmachen. Dabei wird der ganze Markt in Betracht gezogen, also nicht bloss der Markt für Lösungen für Hochleistungs-Kampfflugzeuge allein, sondern auch jener für weniger anforderungsreiche Anwendungen, etwa für den Einsatz in Jet-Trainern und ganz allgemein in Flugzeugen, in denen ähnliche Beschleunigungen auftreten. Diese Beschleunigungs- oder G-Schutzhose soll unter allen Umständen und in allen Bedingungen ohne spezielle Verhaltensweisen des Piloten wirksam sein, wie solche bei herkömmlichen G-Anzügen insbesondere im Grenzbereich nötig sind.

Herkömmliche G-Schutzanzüge sind verhältnismässig schwer und steif, und der Träger kommt darin leicht ins Schwitzen, was seine natürliche G-Toleranz und Befindlichkeit negativ beeinträchtigt. Einige G-Anzüge können beim Träger Fuss- und Armschmerzen verursachen, und gegen das von ihnen induzierte Atmen unter Überdruck (*Pressure Breathing under G - PBG*) bestehen allgemein medizinische Zweifel. Eine G-Schutzhose sollte daher einen absolut zuverlässigen G-Schutz, das heisst die Verhinderung von sogenannten *G-LOC* sicherstellen, und diesen G-Schutz mit möglichst geringem Aufwand sicherstellen, möglichst ohne ein Atmen unter Überdruck nötig zu machen. Die G-Schutzhose sollte ohne Einflussnahme des Trägers, das heisst ohne Pressatmen, das heisst ohne *Anti G Straining Maneuvers" (AGSM)* durch den Träger bzw. Piloten ihre optimale Wirkung in allen Situationen entfalten und einen möglichst hohen Tragkomfort bieten, und fast ähnlich bequem zu tragen sein wie Unterwäsche. Dadurch soll sie einer frühzeitigen Ermüdung des Piloten vorbeugen und Schmerzen zuverlässig verhindern. Ausserdem soll diese G-Schutzhose auch eine Auftriebsunterstützung beim Eintauchen in Wasser erzeugen. Optional soll die G-Schutzhose eine aktive Kühleinrichtung einschliessen. Diese G-Schutzhose soll als Standard-Hose hergestellt werden können. Das Mass-Schneidern solcher G-Schutzhosen für einzelne Träger wie das bisher bei den Anzügen meistens nötig war soll nicht mehr nötig sein.

Da die Anpressdrucke bisher von der Hülle ei-

nes G-Schutzanzuges auf den Körper des Trägers erzeugt wird, je nach dem zu schützenden Körperteil, sind die Blasen, die diese Anpressdrucke bewirken, verschieden gross bemessen. Wie den Dokumenten zum Stand der Technik zu entnehmen ist, sind die Volumina der Blasen verhältnismässig gross, bis zu einer fast vollen Deckung des Unterkörpers, was im Verbund mit der Kompressibilität von Luft und unter Berücksichtigung der hohen Onset-Raten von $G_z$ zu einer verlangsamten Reaktion der G-Schutzanzüge führt. Die bisher bekannten und meist üblichen «5 Blasen» G-Schutzhosen stammen im Prinzip aus dem Jahr 1945 und sie erbringen einen G-Schutz von ca. 1.0 G. Es braucht dazu mehr als 24 Liter Luft auf 750 mbar Druck. Der 1.04 G-Schutz-Wert der üblichen G-Schutzhosen wurde von einem berühmten Fliegerarzt auf Basis von über 1000 Tests zertifiziert. Eine verbesserte Variante aus dem Jahr 1980 mit sogenannter «Voll Blasen Deckung» wie zum Beispiel die AEA G-Schutzhose sie bietet, auch bekannt unter dem Namen FCAGT (**F**ull **C**overage **A**nti **G**-**T**rouser) und wie sie zum Beispiel im Eurofighter eingesetzt wird, erbringt einen G-Schutz von nur 1.5 G, oder kurzzeitig mit zusätzlicher Überdruckbeatmung und Gegendruck-Weste bis 2.5 G. Dabei reagiert sie aber auf Beschleunigungsänderungen sehr träge. Ähnlich zum AEA G-Schutzsystem ist auch die JSF Joint Strike Fighter G-Schutzhose der englischen Firma Survitec aufgebaut, die zum Beispiel im F-35 Fighter eingesetzt wird. Der aktuell beste G-Schutzanzug für den ganzen Körper gemäss EP 2 640 637 bietet einen 3 mal schnelleren Druckaufbau als das AEA G-Schutzsystem, wobei 34 Liter Luft auf 750 mbar eingesetzt werden, um eine Vollbedruckung, also eine Bedruckung des ganzen Körpers zu erreichen. Dieses Europäische Patent berücksichtigt dabei auch bereits den Stand der Technik gemäss US 2008/275291 aus WO2005/123504. Diese Dokument offenbart einen Beschleunigungs-Schutzanzug für Piloten von Flugzeugen. Der beschriebene Anzug kann auch in eine separate Jacke und Hose aufgeteilt werden. Mindestens die Teile der G-Schutzhose sind doppelwandig ausgeführt und damit sind auf der Innen- oder Aussenseite luftdichte Fächer gebildet sind, die mit beschleunigungsabhängigen Luftdrucken beaufschlagbar sind. Die G-Schutzhose besteht durchwegs aus einem luftdurchlässigen, reissfesten, feuerfesten und dehnungsarmen synthetischen Textilstoff besteht und die G-Schutzhose ist stellenweise mit Fächern ausgerüstet ist. Durch Anschluss über einen nach aussen führenden Schlauch an eine automatisch dosierbare Druckluftversorgung können diese in einen annähernd kreisrunden Querschnitt aufgepumpt werden, sodass diese Fächer als Muskeln wirken, indem ihre beiden entgegengesetzten Ränder zusammenziehbar sind und die angrenzenden Textilstoffstücke damit spannbar sind. Es sind aber lediglich zwei solche Fächer im Bereich der G-Schutzhose entlang der Beine vorgesehen. DE 10 2007 053236 A1 offenbart einen Beschleunigungs-Schutzanzug, der eine mit Luft gefüllte Bauchblase sowie Vorspannelemente im Bereich der Oberschenkel enthält. Allerdings ist dieses System ein eigenes, vom Anzug getrenntes Funktionsteil und die offenbarte Erfindung ist generell auf einen Anzug bezogen. Die Spannung wird nur lokal an den Vorspannelementen erzeugt.

Die Aufgabe der vorliegenden Erfindung ist es eingedenk der oben dargelegten Sachverhalte des erwähnten Standes der Technik, eine Beschleunigungs-Schutzhose bzw. eine G-Schutzhose zu schaffen, mittels welcher der Binnendruck nach Massgabe der relativen Grösse des zu schützenden Körpers und nach Massgabe der wirkenden lokalen und momentanen Beschleunigung $G_z$ steuerbar ist, und ferner sollen die hierzu zu füllenden Volumina klein bleiben. Die G-Schutzhose soll überdies komfortabel zu tragen sein, ohne nach einer genauen Passform zu verlangen. Sie soll einfach an- und auszuziehen sein, vergleichbar mit dem Anziehen einer gewöhnlichen Jeans-Hose, und eine sonst in einem G-Anzug nötige Überdruckatmung erlässlich machen. Ausserdem soll sie in optionalen Ausführungen Zusatzfunktionen wie eine Klimatisierung bieten. Eine weitere Aufgabe dieser G-Schutzhose ist es, durch rythmische Veränderung des erzeugten Binnendruckes den venösen Rückfluss des Blutes in den Beinen des Piloten zu erleichtern. Diese G-Schutzhose soll ausserdem die Handhaltung des Piloten auf dem Oberschenkel beim Aufblasen bei G-Belastungen nicht verändern, indem keine Druckblasen auf dem Oberschenkel positioniert sind. Eurofighter, F/A-18 und andere Flugzeuge weisen einen zentralen Steuerknüppel auf, und die Piloten legen oft ihren Steuerarm auf den Oberschenkel, um den Arm langfristig zu unterstützen oder in einer langen Kurve das regelmässige Fliegen zu erleichtern. Schliesslich soll diese G-Schutzhose auch über einem Fliegerkombi getragen werden können, und dabei für das Anziehen sogar über die Fliegerstiefel gestreift werden können. Zu diesem Zweck soll sie speziell ausgestattet sein, damit sie bei angezogenem Fliegerkombi und bereits angezogenen Fliegerstiefeln mühlos, einfach und rasch angezogen werden und wieder ausgezogen werden kann, soll also jeweils über die Fliegerstiefel gestreift werden können, sodass diese zum An- und Ausziehen an behalten werden können.

Die Lösung der gestellten Aufgabe wird realisiert duch eine Beschleunigungs-Schutzhose bzw. G-Schutzhose für Piloten von Flugzeugen, in denen hohe Beschleunigungen auftreten, wobei mindestens Teile der G-Schutzhose doppelwandig ausgeführt sind und damit auf der Innen- oder Aussenseite luftdichte Fächer (1; 5 13, 17, 18, 25, 34, 35) gebildet sind, die mit beschleunigungsabhängigen Luftdrucken beaufschlagbar sind, wobei die G-Schutzhose durchwegs aus einem luftdurchlässigen, reissfesten, feuerfesten und dehnungsarmen synthetischen Textilstoff besteht, und die G-Schutzhose stellenweise mit Fächern (1; 5 13, 17, 18, 25, 34, 35) ausgerüstet ist, die durch Aufpumpen über einen nach aussen führenden Schlauch (22) mit Raccord (24) zur Verbindung mit einer automatisch dosierbaren Druckluftversorgung in einen annähernd kreisrunden Querschnitt aufpumpbar sind, sodass diese Fächer als Muskeln wirken, indem ihre beiden entgegengesetzten Ränder zusammenziehbar sind und die angrenzenden Textilstoffstücke (14, 15) damit spannbar, und die sich dadurch auszeichnet, dass diese Fächer (34, 35) durchgehend längs der Innen- und Aussenseite der Hosenbeine verlaufen und am oberen Ende der Hosenbeine je über einen längs des unteren Bereichs (11) der Leisten verlaufenden Leistenkanal (18) verbunden sind, und sich die Fächer (34) auf den Aussenseiten der Hosenbeine von den Leisten aus weiter nach oben erstrecken und gegen den Unterbauch hin in je eine sackartige Blase (13) auslaufen, während sie auf der Hinterseite der Hose, im Bereich des Kreuzes (16) des Trägers miteinander über einen Verbindungskanal (17) kommunizieren und ab diesem ein Steissbeinkanal (5) nach unten abzweigt und sich zwischen die Gesäss-Backen des Trägers in Richtung des Schrittes erstreckt, wobei die Fächer (1; 5 13, 17, 18, 25, 34, 35) über mindestens einen Schlauch (22) mit Raccord (24) mit einer automatisch dosierbaren Druckluftversorgung kommunizieren.

In den abhängigen Patentansprüchen sind besonders vorteilhafte Ausbildungen dieser G-Schutzhose in weiter präzisierter Form beansprucht. Die hier vorgestellte G-Schutzhose erbringt mit weniger als 24 Litern Luft auf 750 mbar nachweislich mehr als 2 bis 2.5 mal die Bedruckungsfläche auf dem Unterkörper als die bisher üblichen «5 Blasen» G-Schutzhosen. Die Bedruckung über die fast 100%ige Bedruckungsfläche dieser neuen G-Schutzhose erfolgt ausserdem viel schneller und gleichmässiger, inklusive Gesäss. Durch die fast 100% gleichmässige Bedruckung der neuen G-Schutzhose entstehen keine Abschnürungen und damit auch keine Blutstaus in irgendwelchen Körperteilen, die dann nicht oder zuwenig durchblutet wären, wie mit allen anderen G-Schutzhosen passieren kann. Ausserdem erfolgt die Bedruckung des ganzen von der Hose bedeckten Körperbereichs in weniger als einer Sekunde, das heisst weit schneller als bei den üblichen «5 Blasen» G-Schutzhosen und sehr viel schneller als bei AEA / FCAGT G-Schutzhosen. Im Gegensatz zu dem 1.0 bis 1.5 G-Schutz aller weltweit existierenden G-Schutzhosen (5 Blasen, AEA, FCAGT usw.), hat diese neue G-Schutzhose in biometrisch kontrollierten Tests in Zentrifugen ihre Schutzfunktion bis 3.8 G bewiesen. Diese vorliegende G-Schutzhose erreicht diese hervorragenden Leistungen im Vergleich zu den bekannten G-Schutzhosen durch ihre spezielle Konstruktion gemäss dem Patentanspruch. Es gelingt damit erstmals, für den grössten Teil der Einsätze und Flugoperationen mit einzig einer G-Schutzhose
anstatt
eines aufwändigen kompletten G-Schutzanzuges
den nötigen Beschleunigungsschutz
zu gewährleisten. Diese G-Schutzhose ist selbstverständlich weit leichter, komfortabler und rascher anzuziehen, zu tragen und wieder auszuziehen als ein weit aufwändigerer und kompletter G-Schutzanzug.

Anhand der Zeichnungen wird diese G-Schutzhose und der ihr zugrunde liegende Erfindungsgedanke näher erläutert. Es zeigt:

Fig. 1:      Eine 5-Blasen G-Schutzhose nach dem Stand der Technik;

Fig. 2:      Die 5-Blasen-Geometrie der G-Schutzhose nach Figur 1;

Fig. 3:      Eine G-Schutzhose mit Vollabdeckung durch Blasen nach dem Stand der Technik;

Fig. 4:      Die Geometrie der Volldeckungs-Blase der G-Schutzhose nach Figur 3;

Fig. 5:      Die G-Schutzhose gemäss Erfindung, von innen nach aussen gekehrt, von einem virtuellen Körper getragen, mit pneumatischen Muskeln längs der Innen- und Aussenseiten der Hosenbeine, sowie geteilter Bauchblase;

Fig. 6:      Die Geometrie der Fächer bzw. der pneumatischen Muskeln der G-Schutzhose nach Figur 5, welche mit Druckluft aufblasbar sind und in die G-Schutzhose integriert werden, im Zustand wenn gesondert auf eine Ebene ausgebreitet;

Fig. 7:      Das Gleiche wie in Figur 6 Gezeigte, aber mit Pfeilen zum Andeuten, wie die hier und in Figur 6 äusseren Fächer nach innen umgeschlagen werden, zur Bildung der dann inneren Fächer längs der Innenseiten der Hosenbeine;

Fig. 8:      Die Geometrie und Lage der Fächer bzw. der pneumatischen Muskeln der G-Schutzhose nach Figur 5, in der räumlichen Position bzw. Lage innerhalb der G-Schutzhose nach dem Umschlagen gemäss Figur 7 zum Tragen der G-Schutzhose, aber die G-Schutzhose wie hier gezeigt mit der Innenseite nach aussen gekehrt;

Fig. 9:      Ein als pneumatischer Muskel wirkendes Fach, innen ausgeschlagen mit einer gummielastischen, luftundurchlässigen und dehnbaren Schicht, im flachen Zustand im Querschnitt gezeigt;

Fig. 10:      Ein als pneumatischer Muskel wirkendes Fach, innen ausgeschlagen mit einer gummielastischen, luftundurchlässigen und dehnbaren Schicht, im teilweise aufgeblähten und kontrahierenden Zustand im Querschnitt gezeigt;

Fig. 11:   Ein als pneumatischer Muskel wirkendes Fach, innen ausgeschlagen mit einer gummielastischen, luftundurchlässigen und dehnbaren Schicht, im voll aufgeblähten und voll kontrahierten Zustand im dann annähernd kreisrunden Querschnitt gezeigt;

Fig. 12:   Die G-Schutzhose mit der Innenseite nach aussen gekehrt im schlaffen Zustand von vorne gesehen, mit den beiden im Kniebereich leicht gebeugten Hosenbeinen nach aussen gespreizt;

Fig. 13:   Die G-Schutzhose mit der Innenseite nach aussen gekehrt von hinten gesehen, im Zustand mit teilweise aufgepumpten Fächern;

Fig. 14:   Die G-Schutzhose mit der Innenseite nach aussen gekehrt im entspannten Zustand von der rechten Seite her gesehen am Boden liegend, mit unterschiedlich abgewinkelten Kniebereichen der beiden Hosenbeine;

Fig. 15:   Die G-Schutzhose mit der Innenseite nach aussen gekehrt im gespannten Zustand mit aufgepumpten Fächern von vorne gesehen;

Fig. 16:   Die G-Schutzhose mit der Innenseite nach aussen gekehrt im gespannten Zustand mit aufgepumpten Fächern von der linken Seite her gesehen;

Fig. 17:   Die G-Schutzhose mit der Innenseite nach aussen gekehrt im gespannten Zustand mit aufgepumpten Fächern von der rechten Seite her gesehen;

Fig. 18:   Eine weitere Ausführung dieser G-Schutzhose mit der Innenseite nach aussen gekehrt im schlaffen Zustand, getragen von einem virtuellen Körper, zur Darstellung der Lage ihrer inneren Komponenten, von leicht schräg vorne gesehen;

Fig. 19:   Diese Ausführung der G-Schutzhose mit der Innenseite nach aussen gekehrt im schlaffen Zustand, getragen von einem virtuellen Körper zur Darstellung der Lage ihrer inneren Komponenten, von der linken Seite her gesehen;

Fig. 20:   Diese Ausführung der G-Schutzhose im schlaffen Zustand, jetzt mit der Aussenseite nach aussen gekehrt, getragen von einem virtuellen Körper, von hinten gesehen;

Fig. 21:   Diese Ausführung der G-Schutzhose nach Figur 20 im schlaffen Zustand, getragen von einem virtuellen Körper, von rechts und schräg hinten gesehen;

Fig. 22:   Eine weitere Ausführung der G-Hose nach dem Anziehen, mit offenen Reissverschlüssen in den Vorderseiten der Hosenbeine, von vorne gesehen;

Fig. 23:   Die G-Hose nach Figur 22 mit den offenen Reissverschlüssen an den Vorderseiten der Hosenbeine, von hinten gesehen;

Fig. 24:   Die G-Hose nach Figuren 22 und 23 mit geschlossenem Reissverschluss am linken Hosenbein und ganz geöffnetem Reissverschluss am rechten Hosenbein, von vorne gesehen;

Fig. 25:   Die G-Hose nach Figuren 22 und 23 mit teilweise geöffnetem Reissverschluss am rechten Hosenbein und ganz geöffnetem Reissverschluss am linken Hosenbein, von vorne gesehen;

Fig. 26:   Die G-Hose nach Figuren 22 und 23 nach dem Anziehen, mit ganz geöffneten Reissverschlüssen an den Vorderseiten der beiden Hosenbeine, von vorne gesehen;

Fig. 27:   Die G-Hose nach Figuren 22 und 23 im getragenen Zustand, mit geschlossenen Reissverschlüssen an den Vorderseiten der Hosenbeine, von vorne gesehen;

Fig. 28:   Die G-Hose nach den Figuren 22 bis 27 angezogen, auf ihre rechte Seite gesehen;

Fig. 29:   Die G-Hose nach den Figuren 22 bis 28 angezogen, auf ihre linke Seite gesehen;

Fig. 30:   Die G-Hose nach den Figuren 22 bis 29 am Boden liegend, mit geöffneten Reissverschlüssen an den Vorderseiten der Hosenbeine, von vorne gesehen;

Fig. 31:   Die G-Hose nach den Figuren 22 bis 30 am Boden liegend, mit geöffneten Reissverschlüssen an den Vorderseiten der Hosenbeine, von hinten gesehen;

Fig. 32:   Die G-Schutzhose nach den Figuren 22 bis 31, getragen über ein Fliegerkombi und insbesondere über die Fliegerstiefel, mit geöffnetem Reissverschluss am rechten Hosenbein;

Fig. 33:   Die G-Schutzhose nach den Figuren 22 bis 32, getragen über ein Fliegerkombi und insbesondere über die Fliegerstiefel, mit geschlossenen Reissverschlüssen an den Hosenbeinen;

Fig. 34: Ein Pilot mit dieser G-Schutzhose, angezogen über sein Fliegerkombi und über seine Fliegerstiefel, sodass die Hosenbeine der G-Schutzhose wie jene einer Überfallhose auf den Schuhen der Stiefel enden.

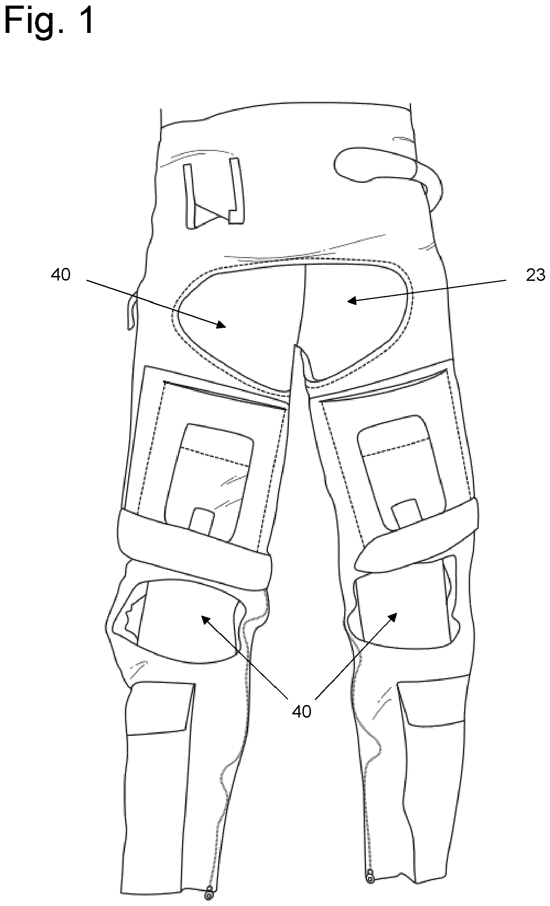

Um das Wesen der Erfindung besser zu verstehen, werden zunächst kurz die Systeme von G-Schutzhosen gemäss dem Stand der Technik vorgestellt und diskutiert. Hierzu zeigt die Figur 1 eine sogenannte 5-Blasen G-Schutzhose in angezogenem Zustand. Sie wurde in den späten 1940er Jahren erfunden und bildet immer noch das meist produzierte G-Schutz-System im Einsatz. Eine solche G-Schutzhose erhöht bekannterweise den G-Schutz eines Piloten um durchschnittlich 1.0 G. Sie wird über einem Piloten-Overall 23 getragen und in ihr Inneres sind mehrere Blasen - fünf an der Zahl - integriert. Im Bereich um den Schritt sowie im vorderen Bereich der Knie sind Aussparungen 40 vorhanden, um die Bewegungsfreiheit für das Sitzen zu verbessern. Die Blasen sind alle miteinander verbunden und werden über einen Druckluftschlauch im Bedarfsfall aufgepumpt. Die aufgepumpten Bereiche drücken hernach direkt auf die Körperoberfläche des Piloten, und an Rändern der Aussparungen 40 wird ein Blutstau verursacht, ähnlich wie durch eine Blutdruck-Manchette beim Arzt, und dieser Blutstau kann zu Kreislauf-Störungen führen, zu erhöhtem Blutdruck und zu einer erhöhten Herzschlagrate.

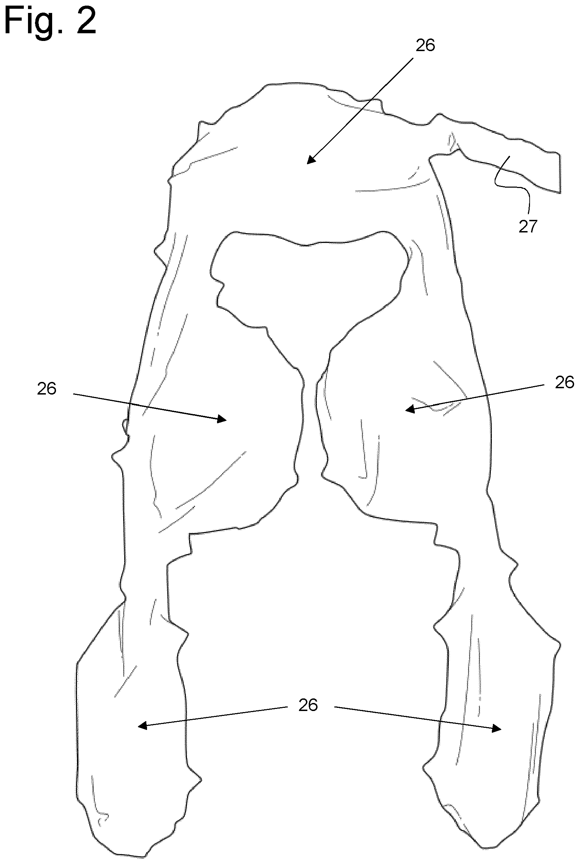

Die Figur 2 zeigt das Blasen-System dieser G-Schutzhose mit ihren fünf miteinander kommunizierenden Blasen 26 gesondert dargestellt. Die verschiedenen Blasen 26 werden über einen Schlauch 27 mit Druckluft versorgt. Innerhalb der G-Schutzhose bedeckt je eine Blase 26 den Oberschenkel auf seiner Vorderseite, sowie den Unterschenkel auf ebenfalls seiner Vorderseite. Ausserdem wirkt eine fünfte Blase 26 auf den Unterbauch. Mit Druckbeaufschlagung dieses Blasensystems werden die Blasen 26 ihrer Geometrie gemäss aufgeblasen und erzeugen einen Druck auf den Körper des Trägers, mit dem Ziel, dem hämostatischen Druck des Piloten entgegenzuwirken. Nachteilig wirken sich die grossen Volumina der Blasen 26 aus, welche erstens das System relativ träge machen, mit entsprechend langen Reaktionszeiten. Zweitens bedecken diese luftdichten Blasen 26 verhältnismässig grosse Teile des Körpers des Trägers und verhindern dort die Abfuhr von Schweiss. Daher erweist sich eine solche G-Schutzhose als eigentlicher "Schwitzkasten", das heisst sie erzeugt einen Hitzestau in den Beinen und entsprechend lässt der Tragkomfort stark zu wünschen übrig. Im Gegensatz zu der neuen G-Schutzhose gemäss dieser Anmeldung muss diese Art von G-Hose sehr eng getragen werden, um irgendeine Anti-G-Leistung zu erbringen, was die freie Bewegung und den Tragkomfort sehr einschränkt.

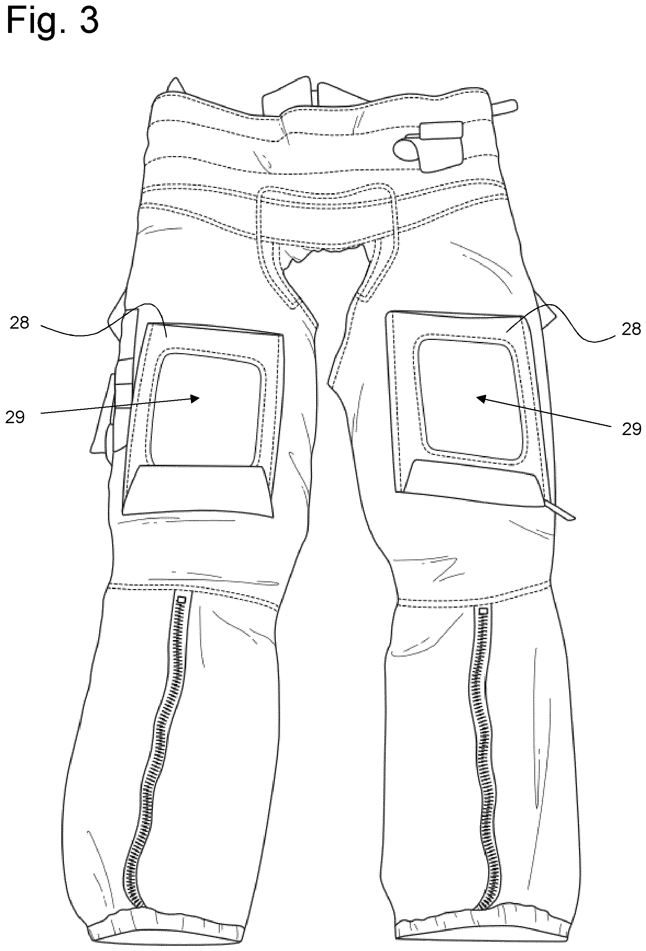

Die Figur 3 zeigt ein weiteres Beispiel aus dem Stand der Technik, eingeführt um 1980, nämlich eine Voll-Deckungs G-Schutzhose. Bei dieser Hose, die hier lose am Boden liegend in einer Ansicht von vorne dargestellt ist, erstrecken sich die Blasen noch über weit grössere Teile des Körpers des Trägers, wie das nachfolgend noch aufgezeigt wird. Diese herkömmliche G-Schutzhose ist aus einem relativ schweren und nicht luftdurchlässigem Textilstoff laut ISO 9237 20 bis 90 l / m$^2$ x s hergestellt, vorzugsweise aus einem feuerfesten Nomex-Aramidgewebe als Aussenhülle, in dem sich die Blase befindet. Das Blasensystem besteht aus verstärkten und nicht dehnbarem polyurethanbeschichtetem Nylon. Die Aussenhülle ist mit Reissverschlüssen für die Taille und die Unterschenkel ausgestattet, mit zum Beispiel sechs verstellbaren Schnürbereichen mit Schnürsenkeln und zwei leicht abnehmbaren Beintaschen 28 mit Reissverschluss zum Öffnen und Schliessen. Vorne auf den Oberschenkeln sind diese Taschen 28 mit Sichtfenstern 29 eingearbeitet, zur Aufnahme und zum Einsehen von Dokumenten. Wiederum: Im Gegensatz zu der neuen G-Schutzhose gemäss dieser Anmeldung muss diese in Figur 3 gezeigte Art von G-Hose sehr eng getragen werden, um eine effektive Anti-G-Leistung zu erbringen, was die freie Bewegung und Bequemlichkeit des Piloten sehr einschränkt, und die Anziehzeit sehr verlängert. Sie bedruckt auch nicht das Gesäss und ihre grosse Bauchblase stösst/drückt unter Druck gewaltig und sehr unangenehm in den Magen-Bereich. Eine solche Hose erhöht den G-Schutz eines Piloten um durchschnittlich 1.5 G.

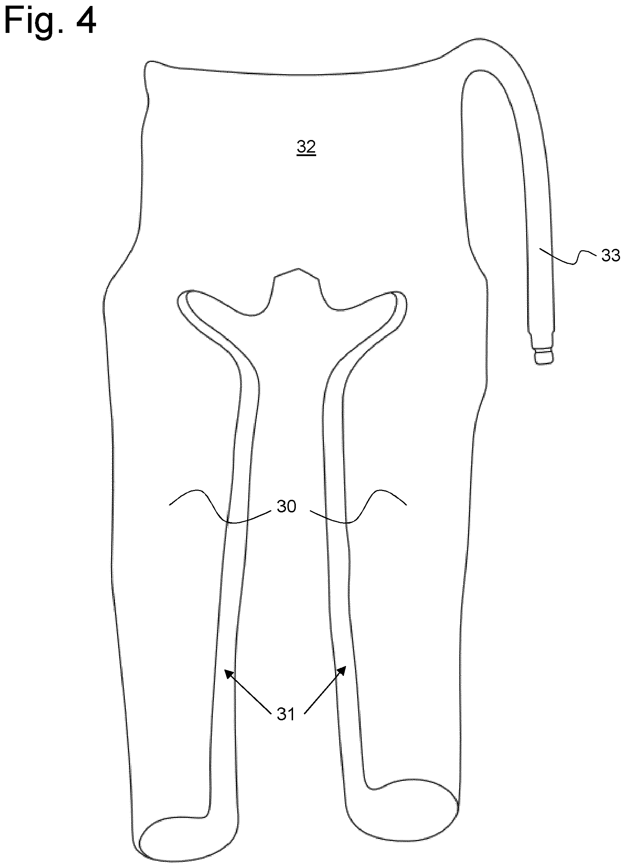

Die Figur 4 zeigt das Blasen-System dieser Voll-Deckungs G-Schutzhose nach Figur 3 gesondert dargestellt. Die Blase 30 erstreckt sich praktisch um die ganze Oberfläche der Beine, indem sie die beiden Beine je von aussen bis auf einen Spalt 31 längs der Innenseite der Hosenbeine voll umschlingt - deshalb der Begriff Voll-Deckungs G-Schutzhose. Oben ist die Blase 30 über den Lenden- und UnterbauchBereich 32 weitergeführt und bedeckt diesen bis zu den seitlichen Hüften. Diese Blase 30 wird von einem seitlich einmündenden Schlauch 33 mit Druckluft versorgt. Auch hier erweist sich die Bedeckung grosser Teile der Beine und des Unterbauches für die Wärmeabfuhr des Körpers als nachteilig. Viele Körperteile werden von dieser Hose mit luftdichtem Material bedeckt und sie wirkt demzufolge als eigentliche "Schwitzhose", denn beim Fliegen sitzt man auf dem Gesäss und somit kann auch dort keine Wärmeabfuhr aus dem Körper des Piloten nach aussen erfolgen. Entsprechend unangenehm zu tragen erweist sich eine solche Voll-Deckungs G-Schutzhose. Das grosse Volumen der einstückigen Blase 30 führt zu einer systembedingten Trägheit, das heisst die Rekationszeiten für den Druckaufbau und wieder Druckabbau sind verhältnismässig lang.

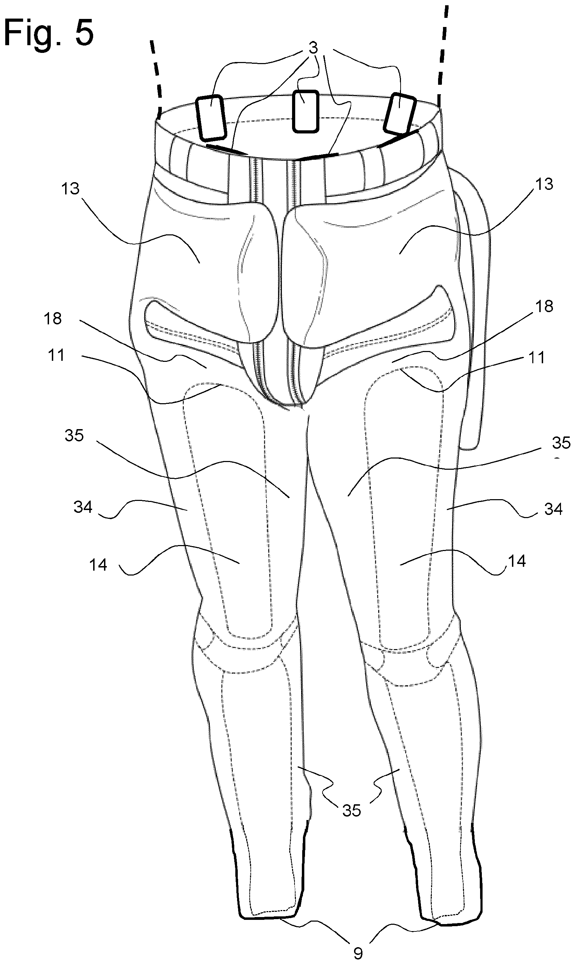

Die erfindungsgemässe G-Schutzhose ist in Figur 5 mit der Innenseite nach aussen gekehrt gezeigt, und sie besteht im Unterschied zu den bisher bekannten G-Schutzhosen grundsätzlich und durchwegs aus einem einzigartigen, speziell für diese G-Schutzhose entwickelten Stoff, der eine hohe Luftdurchlässigkeit nach DIN EN ISO 9237 bis 500 l/m$^2$ x s min bietet. Dieser Stoff ist ausserdem gekennzeichnet durch eine extrem hohe Reissfestigkeit nach ISO 13934-1 von bis 2000 N/5 cm. Diese Norm ISO 13934-1 spezifiziert ein Verfahren zum Bestimmen der maximalen Kraft und Dehnung von textilen Flächengebilden unter Verwendung einer Streifenmethode. Das Verfahren ist hauptsächlich auf textile Gewebe anwendbar, einschliesslich Gewebe, die Dehnungseigenschaften aufweisen, welche erstens durch das Vorhandensein von elastomeren Fasern im Gewebe erhalten werden, und zweitens auch durch eine mechanische oder chemische Behandlung des Gewebes. Es kann aber auch auf Stoffe angewendet werden, die mit anderen Techniken hergestellt wurden, jedoch nicht für Geotextilien, Vliesstoffe, beschichtete Gewebe, Glasgewebe und Gewebe aus Kohlefasern oder Polyolefinbandgarnen. Das Verfahren spezifiziert die Bestimmung der maximalen Kraft und Dehnung bei maximaler Kraft von Prüfkörpern im Gleichgewicht mit der Standardatmosphäre für die Prüfung, und von Prüfkörpern im nassen Zustand. Das Verfahren beschränkt sich auf den Einsatz von CRE-Prüfmaschinen (*Constant Rate of Extension*).

Diese G-Schutzhose wie in Figur 5 gezeigt bietet eine extrem hohe Belastbarkeit bei einer sehr geringen Dehnung und ihr Flächengewicht beträgt bloss noch sehr niedrige 121+/-5 Gramm/Quadratmeter. Das Material dieser G-Schutzhose kann direkt auf der Haut getragen werden, womit auch die Kompressibilität einer sonst nötigen klassischen Unterwäsche wegfällt. Optional kann die G-Schutzhose aus hygienischen Gründen allerdings mit einer gesondert angepassten, feuerfesten, hauchdünnen und luftdurchlässigen textilen Unterwäsche getragen werden. Dabei bietet diese G-Schutzhose einen aussergewöhnlich angenehmen Tragkomfort, ein Gefühl auf der Haut wie eine sehr feine natürliche Baumwolle, ähnlich wie ein Pyjama. Der Gewebestoff dieser G-Hose besteht aus feuerfesten, vollsynthetischen, antistatischen, sehr strapazierfähigen und dehnungsarmen Garn-Mischungen, unter anderem Aramid-Fasern, die zu einem luftdurchlässigen Stoff verarbeitet sind. Die Vorderseiten und Hinterseiten der Hosenbeine sind einzig als Textilstreifen 14 ausgeführt. Sie sind atmungsaktiv und ermöglichen die Abfuhr von Körperwärme.

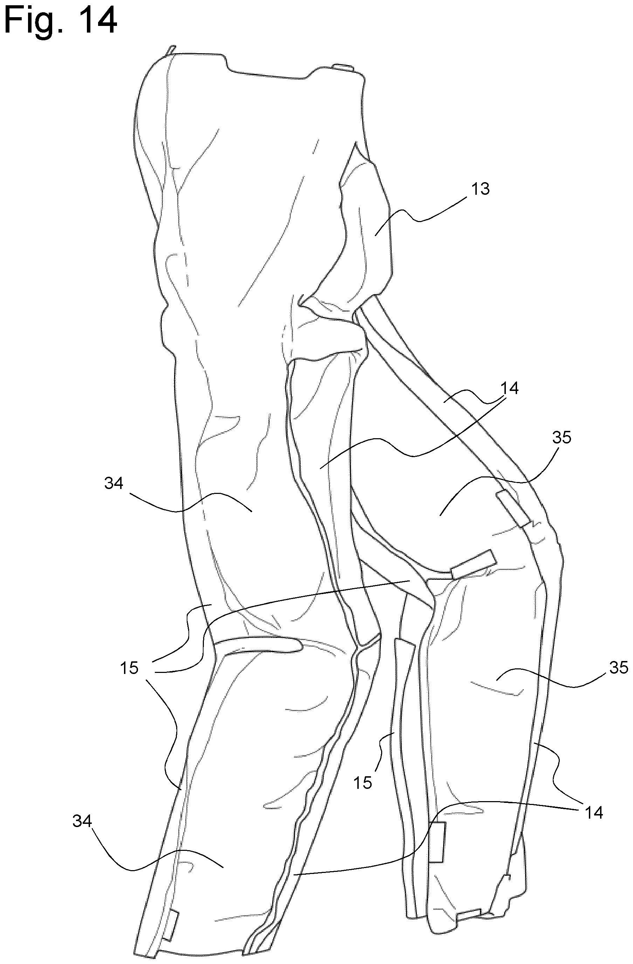

Als Besonderheit ist diese G-Schutzhose nicht auf der Basis eines herkömmliche Blasensystem aufgebaut, sondern sie beinhaltet ein pneumatisches Muskelsystem aus Fächern mit einer kleinen und geteilten Bauchblase 13. Äussere solche Fächer 34 erstrecken sich längs der Aussenseiten der beiden Hosenbeine vom Bund bis zum unteren Hosensaum 9. Innere solche Fächer 35 erstrecken sich längs der Innenseiten der Hosenbeine vom Schritt bis hinunter zum unteren Hosensaum 9. Diese äusseren 34 und inneren 35 Fächer sind längs des unteren Leistenrandes 11 über je einen Leistenkanal 18 miteinander verbunden. Vorne und hinten zwischen den äusseren 34 und inneren Fächern 35, das heisst im Bereich der Vorder- und Rückseiten der Hosenbeine sind luftdurchlässige Textilstreifen 14, 15 (auch in Figur 14 gezeigt) eingebaut, die dann direkt auf den Vorder- und Rückseiten der Beine des Trägers anliegen. Die äusseren Fächer 34 erstrecken sich oberhalb der Beine über den Unterbauchbereich und bilden je eine sackartige Tasche zur Bildung je einer Blase 13, sodass die beiden so gebildeten Blasen 13 den gesamten Unterbauchbereich bedecken. Auf der Rückseite sind die beiden äusseren Fächer 34 über einen Kanal verbunden, wie das anhand weiterer Zeichnungen noch klar wird. Diese als pneumatisch kontrahierende Muskeln wirkenden Fächer werden über den gesamten Unterkörper einschliesslich der Beine bei Bedarf mit Druck beaufschlagt, wobei diese Fächer 34, 35, 18, 13 aber eine relativ geringe flächenmässige Abdeckung aufweisen, aber doch den gesamten Unterkörper mit Druck beaufschlagen können. Diese pneumatisch kontrahierenden Muskeln haben nicht zum Ziel, direkt als aufgeblasene Bereiche mit Druck auf den anliegenden Körper zu wirken, sondern vielmehr indirekt, indem sie die anliegenden luftdurchlässigen Stoffteile um den Körper spannen. Sie ziehen also die blasenfreien Textilstoff-Streifen 14, 15 bei Bedarf augenblicklich zusammen und umspannen die damit bedeckten Körperteile oder Glieder, wodurch die dortige Druckbeaufschlagung des Körpers zustande kommt. Nach ausführlichen Zentrifugen-Tests erwies es sich, dass diese G-Schutzhose den Piloten durchschnittlich 3.5 bis 3.8 G mehr G-Schutz bietet, dass heisst von 2 bis 3 mal mehr G-Schutz als alle anderen marktüblichen G-Schutzhosen. Diese G-Schutzhose kommt mit einem extrem leichten Gesamtgewicht aus, das etwa einem Drittel weniger Gewicht als jenem einer marktüblichen G-Schutzhose entspricht. Sie erlaubt ein einfaches Anziehen wie eine Jeanshose, im Gegensatz zu den komplizierten anzuziehenden üblichen G-Schutzhosen.

Die eingebauten Fächer 34, 35, 18, 13 wirken demnach als pneumatisch funktionierende Muskeln für ein Kontrahieren, nicht als blosse Blasen, die dazu bestimmt wären, direkt auf die Körperoberfläche zu drücken. Diese Fächer sind beispielsweise durch Nähen oder Kleben oder Schweissen in den Textilstoff integriert, durch ein Aufdoppeln, indem ein Streifen textilen Materials innen oder aussen auf das Textilmaterial der G-Schutzhose aufgebracht wird, so dass der Streifen nur an seinem Rand mit dem Textilmaterial verbunden ist. Diese Fächer bestehen aus dem gleichen dehnungsarmen Material wie das sonstige Textilmaterial. In diese Fächer sind in einer ersten Ausführungsvariante flexible dehnbare Schläuche aus einem Elastomer eingelegt, welche sich bei Druckbeaufschlagung ausdehnen. Diese aufgeblähten Schläuche legen sich dann an die Innenseiten der Fächer an und blasen diese zu einem kreisrunden Querschnitt auf. In der Folge bewegen sich die beiden seitlichen Ränder der zunächst flächigen Fächer gegeneinander hin, das heisst sie kontrahieren, und sie spannen somit die aussen an den Fächern anschliessenden Textilstücke. In einer anderen Ausführungsform sind die Fächer innen mit einem gummielastischen, luftundurchlässigen Material dichtend ausgeschlagen. Wenn in das Innere der Fächer Luft eingepumpt wird, so verformen sich die Fächer augenblicklich zu einem kreisrunden Querschnitt und ziehen die aussen anliegenden Textilstücke kontrahierend zusammen, welche dann die bedeckten Körperteile umspannen und damit Druck auf die Körperoberfläche ausüben.

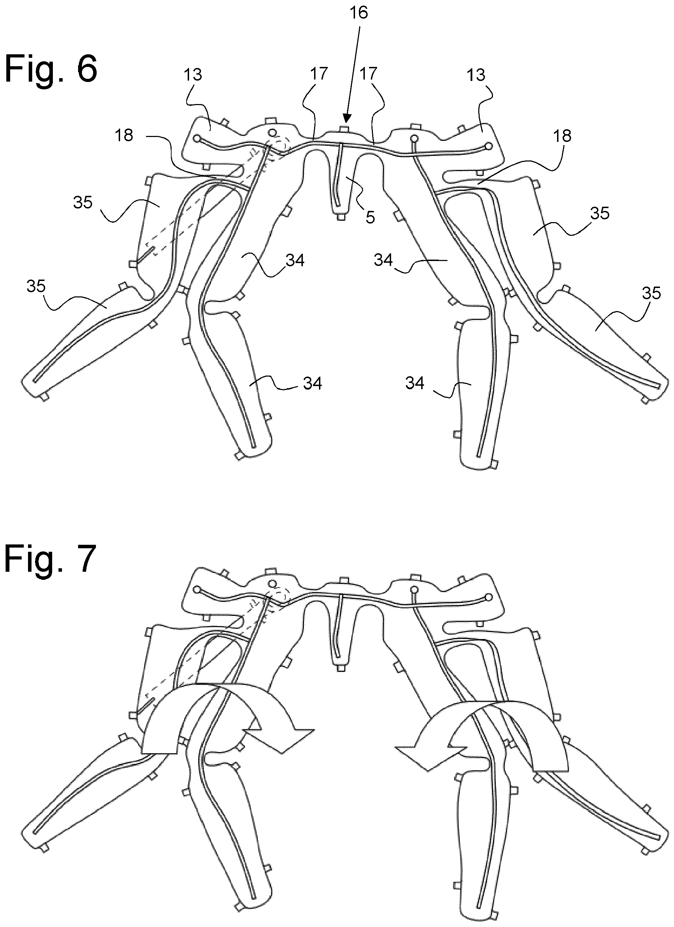

Die Figur 6 zeigt die Geometrie der Fächer bzw. dieser pneumatisch kontrahierenden Muskeln der G-Schutzhose nach Figur 5, welche mit Druckluft aufblasbar sind und in die G-Schutzhose integriert werden, im Zustand wenn auf eine Ebene ausgebreitet. Die Fächer 34 sind für die Aussenseiten der beiden Hosenbeine bestimmt. Die im Bild aussen eingezeichneten Fächer 35 sind hingegen für die beiden Innenseiten der Hosenbeine bestimmt und sie werden zum Einbau wie in Figur 7 mit den gebogenen Pfeilen angedeutet umgeschlagen. Oben sind die Fächer 35 für die Hosenbein-Innenseiten über je einen Leistenkanal 18 mit den Fächern 34 für die Hosenbein-Aussenseiten verbunden. Die Fächer 34 für die Aussenseiten der Hosenbeine erstrecken sich ab der Hüfte noch weiter nach oben, bis zum Hosenbund. Sie laufen auf der Vorderseite der Hose in je eine sackartige Tasche als Blase 13 aus, welche beiden Blasen 13 dann gemeinsam den ganzen Unterbauchbereich abdecken. Mit dem hinten, im Kreuzbereich 16 des Trägers zu liegenden kommenden Bereich sind die äusseren Fächer 34 über einen weiteren Kanal 17 miteinander verbunden. Von diesem Kanal 17 zweigt in Richtung nach unten ein Steissbein-Kanal 5 ab, der sich dann im getragenen Zustand der G-Schutzhose zwischen den Gesässbacken des Trägers nach unten erstreckt. Dieser Steissbeinkanal 5 misst 2 cm bis 6 cm in der Breite und erstreckt sich nach abwärts, zur Druck-Beaufschlagung des Gesässes, aber ohne gefährlichen «Luft Kissen Effekt» im Falle einer Schleudersitz-Betätigung.

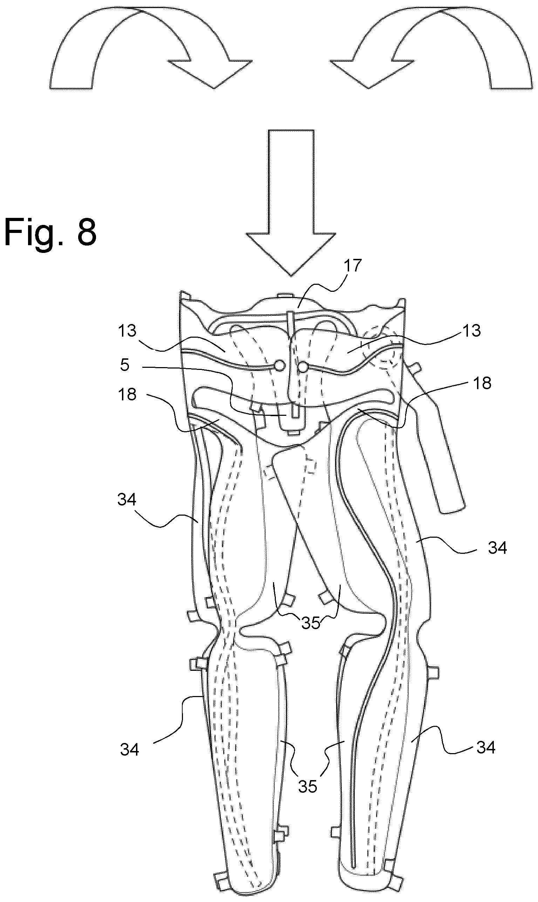

In Figur 8 ist diese Fächer-Geometrie in räumlicher Darstellung gezeigt, an einer G-Schutzhose, mit den Fächern 35 für die inneren Seiten der Hosenbeine, ausgehend von der Situation wie in Figur 6 und Figur 7 gezeigt, aber diese Fächer 35 jetzt nach innen umgeschlagen. Die Fächer 34 für die äusseren Seiten der Hosenbeine verlaufen also aussen längs der Aussenseiten der Hosenbeine und und die Fächer 35, die sich längs der Innenseite der Hosenbeine erstrecken sind über die Leistenkanäle 18 kommunizierend mit den äusseren Fächern 34 verbunden. Alle Bereiche zwischen den äusseren 34 und inneren Fächern 35 bleiben ausdrücklich frei von luftdichter Bedeckung bzw. sind von gut luftdurchlässigem Textilstoff überbrückt. Im Unterbauchbereich erkennt man die ausgehend von der Lage in Figur 6 und Figur 7 nach innen umgelegten sackartigen Taschen als Blasen 13. Im Kreuzbereich erkennt man den Verbindungskanal 17 und den von ihm nach unten abzweigenden Steissbein-Kanal 5.

Alle solchen pneumatischen Muskeln für die Hosenbeine sind einzig auf den Aussen- und Innenseiten der beiden Hosenbeine eingearbeitet, sodass die Vorder- und Hinterseiten der Hosenbeine frei von Fächern bleiben und die Textilstoffe dort direkt als Textilstreifen 14, 15 auf den Beinen aufliegen und in diesen Bereichen eine hohe Luftdurchlässigkeit geboten wird, um Schweiss nach aussen diffundieren zu lassen. Eine Aufblasung auf der Oberseite der Schenkel beim Sitzen wird dadurch wirksam vermieden. Der Pilot kann seinen Unterarm auf seinem Oberschenkel unabhängig von der G-Belastung und der Druck-Beaufschlagung der G-Schutzhose ruhen lassen und der Arm bleibt bei Belastungswechseln ruhig. Das erleichtert inbesondere einen kontinuierlichen Kurvenflug.

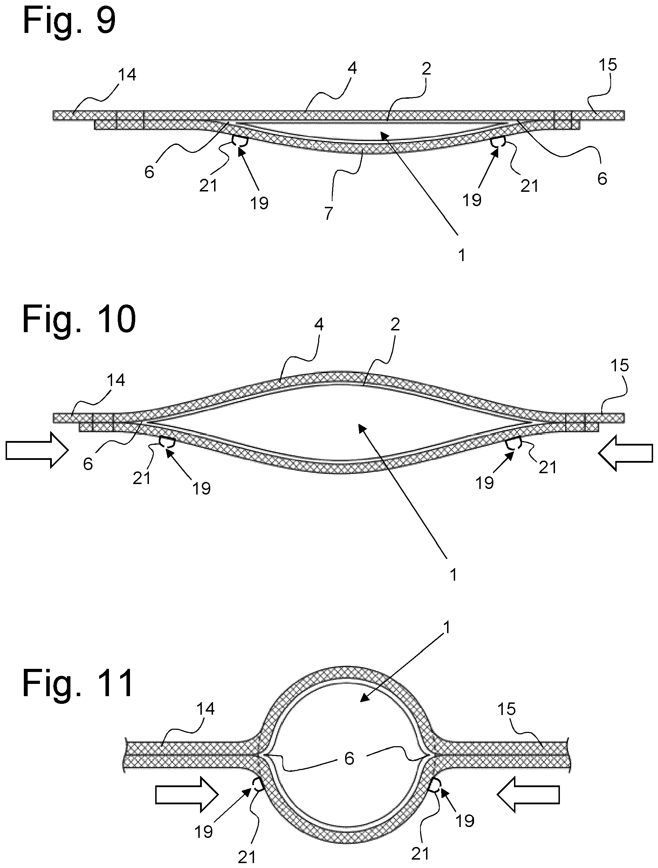

In Figur 9 ist ein Querschnitt durch ein solches Textilfach als pneumatisch wirkender, kontrahierender Muskel dargestellt. Auf einer Seite, das kann auf der Aussenseite wie auch auf der Innenseite des grundsätzlichen Hosenmaterials 4 angeordnet sein, ist ein Textilstreifen 7 aufgebracht. Auf der Innenseite des so gebildeten Faches ist dieses im wie in Figur 9 gezeigten Beispiel durchwegs ausgeschlagen mit einer gummielastischen, luftdichten Schicht 2. In den beiden Ecken 6 des Faches 1 sind die luftdichten Beschichtungen 2 dichtend zusammengeführt. Wird Luft in das Innere dieses Faches 1 gepumpt, so bläht es sich auf, weil die Luft nicht entweichen kann und schliesslich nimmt das Fach einen kreisrunden Querschnitt ein. Die Ränder werden zueinander hin kontrahiert. Es ist klar, dass die auf den beiden Seiten des Fachs - hier links und rechts des Faches - anschliessenden Textilstreifen 14, 15 dadurch zueinander hin zusammengezogen werden, wie in Figur 10 mit den Pfeilen links und rechts aussen angedeutet. In Figur 10 ist das gezeigte Fach 1 nämlich teilweise aufgepumpt. Dieses Aufpumpen kann weitergeführt werden, bis der Querschnitt des Fachs 1 annähernd kreisrund wird, wie das in Figur 11 dargestellt ist. Dazu gibt es ein Dry Air Cooling System als Ausführungsoption: In diesem Fall wird komprimierte, separat durch aufkaschierte Belüftungsadern 21 zugeführte Luft durch die lippenförmigen Öffnungen 19 auf die Körperoberfläche des Trägers entspannt, wo sie für ihn einen Kühleffekt bewirkt.

Die luftdichten inneren Fächerbeschichtungen oder die darin eingelegten Luftschläuche bestehen aus einem Elastomer, sind also flexibel und dehnbar. Sie sind, wie in den Figur 9 bis 11 dargestellt, beidseitig umhüllt von wenig dehnbaren textilen Überzügen und bilden die Fächer 1 der G-Schutzhose. Werden nun die Luftschläuche oder das Innere der Fächer-Beschichtungen 2 in den Fächern 1 mit Druckluft beaufschlagt, so spannen sie angrenzenden Textilstücke und bauen also eine Umlaufspannung $\sigma$ auf, welche über die Beziehung

$$\sigma = p * r$$

einen Druck p im Innern des Körpergewebes aufbaut.

Also ist

$$p = \frac{\sigma[N/m]}{r[m]} \quad \left[N/m^2\right]$$

p umgekehrt proportional zur lokalen Krümmung r des Körperteiles.

Des Weiteren kann ein dehnbarer gummielastischer Schlauch lose durch das Innere eines Faches 1 geführt werden. Wenn Luft in denselben eingepumpt wird, dehnt er sich aus und füllt schliesslich das Innere des Faches 1 komplett aus, und bei hinreichendem Innendruck vermag dieser Schlauch das Fach zu einem annähernd kreisförmigen Querschnitt aufzublähen. Entsprechend werden die beiden Ränder des Faches kontrahiert und die anschliessenden luftdurchlässigen Textilstreifen 14, 15 werden zusammengezogen.

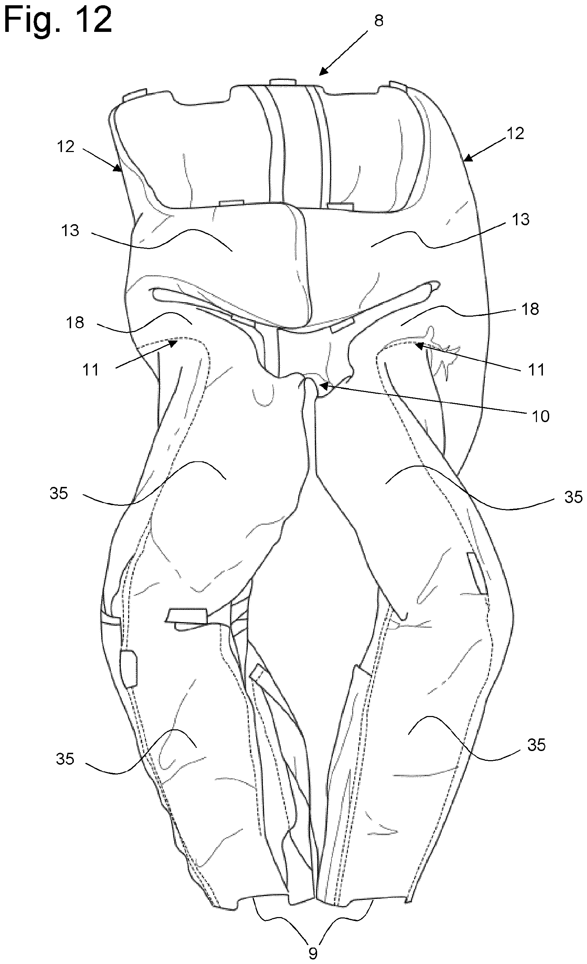

Die Figur 12 zeigt diese G-Schutzhose mit der Innenseite nach aussen gekehrt im schlaffen Zustand am Boden liegend und von vorne gesehen, mit den beiden im Kniebereich leicht gebeugten Hosenbeinen nach aussen gespreizt. Wie auf der Aussenseite der Hosenbeine erstrecken sich auch auf deren Innenseiten Fächer 35 vom Schritt 10 aus längs der Hosenbeine nach unten bis zu den Hosensäumen 9. Vom Schritt 10 aus erstrecken sich Leistenkanäle 18 ab den Fächern 35 schräg nach aussen und oben, dem unteren Rand 11 der Leiste entlang bis zur äusseren Seite 12 der Hose, dem Hüftbereich. Von dort aus erstrecken sich weitere Fächer in den Vorderbereich der Hose unterhalb des Hosenbundes 8, in Form je einer sackartigen Tasche als Blase 13 horizontal längs des Hosenbundes 8 bis in die Bauchmitte des Trägers.

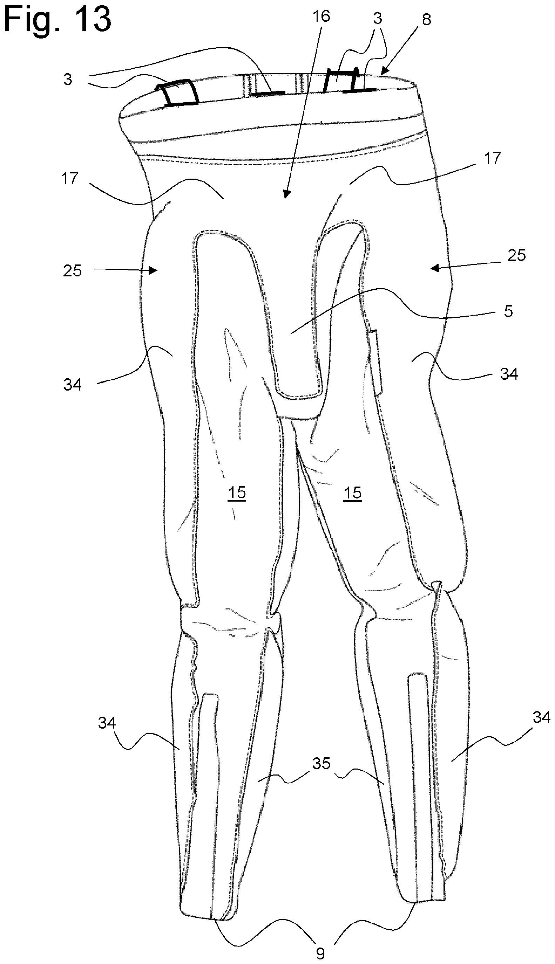

Die Figur 13 zeigt die G-Schutzhose mit der Innenseite nach aussen gekehrt im Zustand mit wenig aufgepumpten Fächern 34, 35 und von hinten her gesehen. Wie diese Figur 13 zeigt, kann der Hosenbund 8 mit Gurtschlaufen 3 ausgestattet sein. Diese liegen hier auf der Innenseite, weil in dieser Darstellung die Innenseite der Hose nach aussen gekehrt ist. Die Fächer 34 zum Spannen der Hose verlaufen bei dieser hier vorgestellten G-Schutzhose von der Nähe des Hüftbundes 8 der Hose auf den beiden äusseren Seiten der Hose abwärts, entlang der Aussenseite der Hosenbeine bis hinunter zu den Hosensäumen 9. Vom Bereich des Hosenbundes 8 aus, auf beiden Seiten der Hose, erstrecken sich die Fächer 34 auf der hier sichtbaren hinteren Seite der Hose horizontal bis zum Kreuzbereich 16 und bedecken insbesondere die äusseren Hälften 25 der Gesässbacken. Von der Mitte der Hosenbund-Rückseite aus erstreckt sich ein Fach in Form eines Steissbeinkanals 5 von 2 cm bis 6 cm Breite abwärts, bis auf die Höhe des Schrittes des Trägers der Hose. Werden die pneumatisch miteinander verbundenen Fächer 5, 17, 34, 35 mit Luftdruck beaufschlagt, so bauchen sie alle aus und sie ziehen sich alle in ihrer Breite zusammen. Sie verkürzen daher die Abstände der beiden Fächerränder und spannen somit die anschliessenden luftdurchlässigen Textilteile 15 und umschliessen somit mit mehr oder weniger Zugspannung die bedeckten Körperteile. Weil der Textilstoff für diese Hose ein ausgesprochen dehnungsarmes textiles Material ist, sowohl hinsichtlich der Faserdehnung als auch der Bindungsdehnung, wird diese Zugspannung und zugkräftige Umschliessung der Körperteile, insbesondere der Ober- und Unterschenkel, aber auch des gesamten Beckenbereichs und insbesondere des Gesässes sehr wirkungsvoll und augenblicklich umgesetzt. Gleichzeitig ist dieses einlagig auf dem Körper aufliegende Textilmaterial aber besonders atmungsaktiv und also luftdurchlässig. Genau diese Eigenschaft stellt sicher, dass der Träger transpirieren kann und sein Schweiss durch die auf dem Körper aufliegenden flachen Textilstreifen 14, 15 entweichen kann. Die Textilabschnitte 15 zwischen den äusseren 34 und inneren Fächern 35 an der Rückseite der Hosenbeine sind mit demselben dünnen und luftdurchlässigen Stoff ausgeführt und dienen dem bequemen Sitzen. Sie gewährleisten infolge ihrer Einlagigkeit einen möglichst direkten und somit natürlichen Kontakt zur Sitzfläche des Cockpitsitzes. Der Tragkomfort ist somit im Vergleich zu herkömmlichen luftundurchlässigen oder nahezu luftundurchlässigen Stoffen sehr wesentlich und unvergleichlich verbessert. Die Fächer weisen im leeren bzw. flachen Zustand eine Breite von maximal einigen Zentimetern auf.

Die Figur 14 zeigt diese G-Schutzhose mit der Innenseite nach aussen gekehrt im schlaffen Zustand mit Blick auf die rechte Seite, die Hose auf dem Boden liegend, wobei das linke Hosenbein etwas noch vorne gerückt dargestellt ist. Man erkennt hier am linken Hosenbein das innere Fach 35, und am rechten Hosenbein das äussere Fach 34. Die zwischen den Fächern 34, 35 eines Hosenbeines liegenden Textilstücke 14, 15 sind mit dünnem und luftdurchlässigem Stoff ausgeführt. Jene auf der Vorderseite der Beine sind hier mit 14 bezeichnet, jene auf der Rückseite der Beine mit 15. Dort stellen diese Bereiche 14, 15 vorallem sicher, dass erstens die von den Fächern 34, 35 aufgebaute Spannung gehalten wird, weil der Textilstoff dehnungsam ist, und zweitens - sehr wichtig - dass der Schweiss, wenn der Träger transpiriert, dank der guten Luftdurchlässigkeit und damit Atmungsaktivität dieses Textilstoffes nach aussen diffundieren kann. Weil diese G-Schutzhose ausserdem aus besonders leichtem Textilstoff gefertigt ist, bietet sie einen für G-Anzüge bisher unbekannten Tragkomfort. Auf der Vorderseite der G-Schutzhose erkennt man hier die rechte der beiden sackähnlichen Blasen 13, welche sich vor den Bauchbereich des Trägers erstrecken.

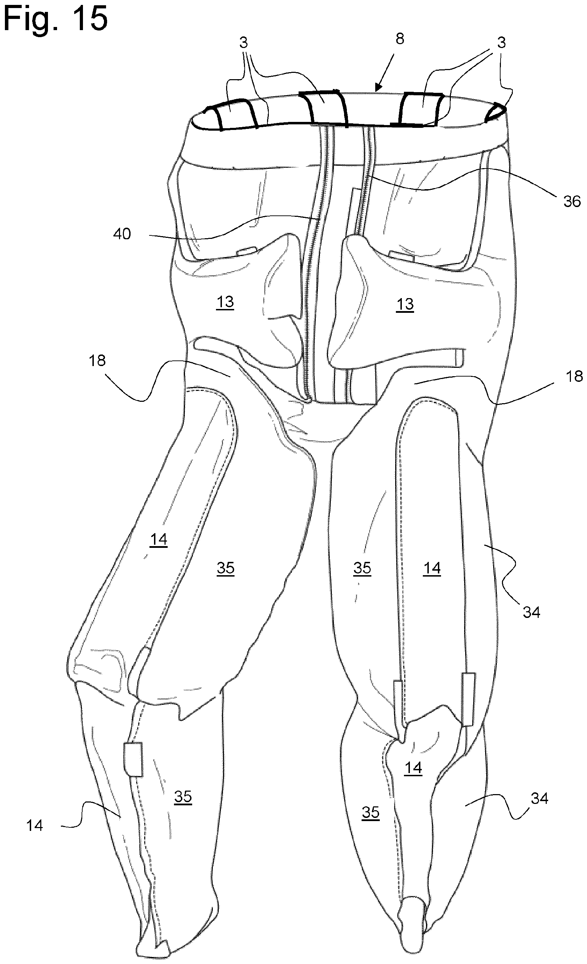

In Figur 15 ist diese G-Schutzhose mit der Innenseite nach aussen gekehrt im gespannten Zustand, das heisst mit aufgepumpten Fächern von vorne her gesehen dargestellt. Deswegen befinden sich die Gurtschlaufen 3 hier auf der Innenseite. Hier sind nun die längs der Aussenseiten der Hosenbeine verlaufenden Fächer 34 aufgepumpt wie auch die längs der Innenseiten der Hosenbeine verlaufenden Fächer 35. Die inneren Fächer 35 münden oben in die Leistenkanäle 18, die längs der unteren Leistenränder verlaufen, also schräg nach aussen und oben, und die in die seitlichen Bereiche bis nahe an den Hosenbund 8 führen. Von den seitlichen Bereichen im Hüftbereich an zweigt auf jeder Seite der G-Schutzhose eine sackähnliche Tasche zur Bildung einer Blase 13 gegen die Bauchmitte hin ab. In dieser Abbildung erkennt man die Textilstreifen 14 auf den Vorderseiten der Hosenbeine, die mit dünnem und luftdurchlässigem Stoff ausgeführt sind, sodass dieser dehnungsarme aber sehr atmungsaktive Textilstoff direkt auf dem nackten Bein des Trägers aufliegt. Über diese vorderen wie auch über die gleichermassen ausgeführten hinteren Seiten der Hosenbeine kann der Träger transpirieren, das heisst sein Schweiss kann effizient durch den Textilstreifen 14, 15 hindurch nach aussen diffundieren, was den Tragkomfort dieser G-Schutzhose ausserordentlich erhöht.

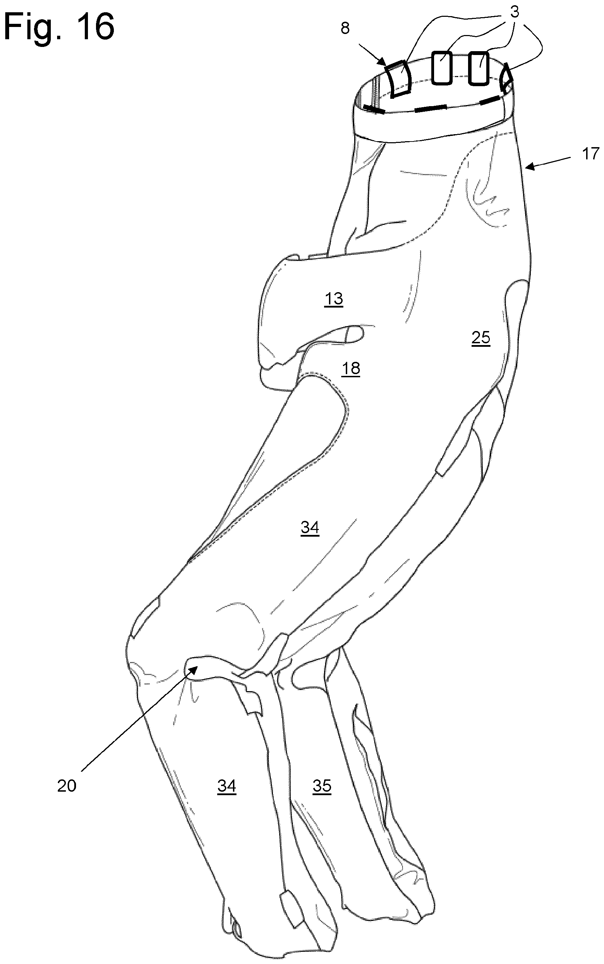

Die Figur 16 zeigt die G-Schutzhose mit der Innenseite nach aussen gekehrt im schlaffen Zustand mit leeren Fächern 13, 18, 25, 34, 35, auf die linke Seite der Hose gesehen. In dieser Darstellung blickt man auf die äusseren Fächer 34 auf der linken Aussenseite des linken Hosenbeins. Im Kniebereich ist das Fach 34 so geschnitten, dass eine Einbuchtung 20 gebildet ist, welche das Abwinkeln des Knies für die Sitzposition im Cockpitsitz spannungsfrei ermöglicht. Ansonsten ist das Fach 34 durchgehend ausgeführt, für den Oberschenkel wie auch den Unterschenkel des Trägers.

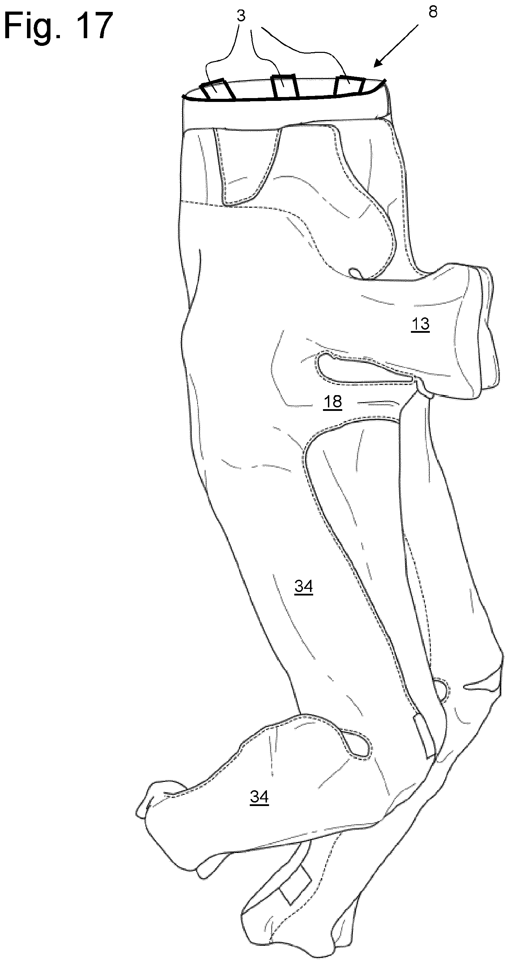

Die Figur 17 zeigt die G-Schutzhose mit der Innenseite nach aussen gekehrt im teil-gespannten Zustand mit nicht voll aufgepumpten Fächern 13, 18, 34, von der rechten Seite her gesehen, mit unterschiedlich abgewickelten Kniebereichen der beiden Hosenbeine. Hier erkennt man deutlich das gut sichtbare Fach 34 auf der rechten Seite der Hose, also des rechten Hosenbeins und der rechten Hüfte. Man erkennt vor dem Lendenbereich die sackartige Blase 13, die sich unterhalb des Hosenbundes 8 längs desselben erstreckt und die mit der symmetrisch zur gegenüberliegenden Blase 13 angeordneten in der Mitte zusammenstösst.

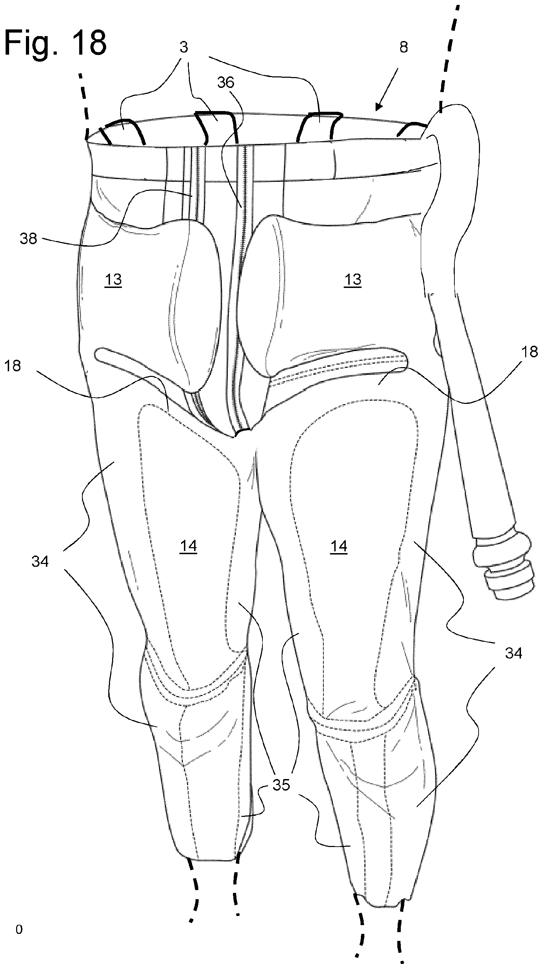

In Figur 18 ist diese G-Schutzhose mit der Innenseite nach aussen gekehrt im schlaffen Zustand gezeigt, angezogen an einem virtuellen Körper, der strichliniert angedeutet ist, von leicht schräg vorne gesehen, zur Darstellung der Lage der einzelnen Komponenten im Innern der Hose. Man erkennt die äusseren Fächer 34, längs der Aussenseiten der Hosenbeine, und die inneren Fächer 35 längs der Innenseiten der Hosenbeine. Dazwischen sind dünne und luftdurchlässige Textilstücke 14 angeordnet, zur Aufrechterhaltung der Dehnspannung, wenn die Fächer 34, 35 aufgepumpt sind, und zum Hinausdiffundieren von Schweiss. Oben schliessen die Leistenkanäle 18 an die inneren Fächer 35 an, und dann oberhalb derselben die beiden sackartigen Blasen 13 zum Beaufschlagen der Leisten- und Unterbauchgegend im aufgepumpten Zustand. Die G-Schutzhose findet oben mit dem Hosenbund 8 ihren Abschluss. Es sind zwei Reissverschlüsse 36, 38 vom Schritt aus bis zum Bund 8 hin geführt. Der Reissverschluss 36 ist der Primär-Reissverschluss und der zweite Reissverschluss 38 wird nur geöffnet im Fall einer grossen Gewichtszunahme des Trägers, um die Taille der Hose vergrössern bzw. ausweiten zu können. Diese G-Schutzhose ist konzipiert und genäht in einer ähnlichen Passform wie die Hose eines Leder-Motorradkombis, also mit Hosenbeinen für gebeugte Beine. Das bewirkt schliesslich eine viel angenehmere Sitzposition bei Beaufschlagung mit hohem Druck.

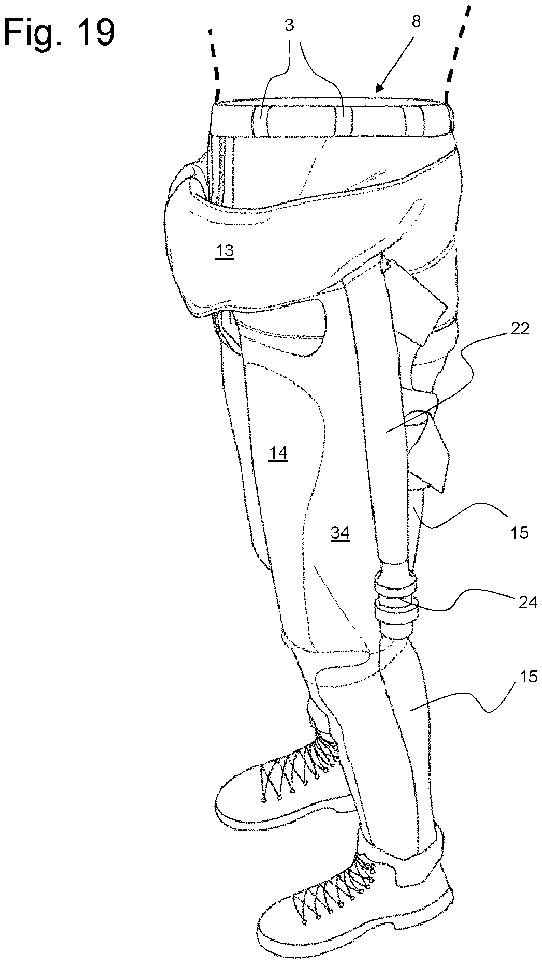

Die Figur 19 zeigt diese Ausführung der G-Schutzhose mit der Innenseite nach aussen gekehrt im schlaffen Zustand, angezogen an einem virtuellen Körper, der strichliniert angedeutet ist, von der linken Seite her gesehen, zum Darstellen der Lage der inneren Komponenten. Man erkennt hier das äussere Fach 34 an der Aussenseite des linken Hosenbeins, dann das vorne anschliessende dünne und luftdurchlässige Textilstück 14 sowie das hinten an das Fach 34 anschiessende dünne und luftdurchlässige Textilstück 15. Ausserdem sieht man hier den Zufuhrschlauch 22 mit Anschluss-Raccord 24 für die Druckluft, nach aussen gekehrt. Die Druckluftversorgung ist bereits in solchen Flugzeugen vorhanden, welche mit G-Schutzanzügen geflogen werden. Sie erlaubt eine fein dosierbare automatisch steuerbare Drucklufzufuhr und Druckluftabfuhr und sie kann mit dieser G-Schutzholse nahtlos weiter verwendet werden.

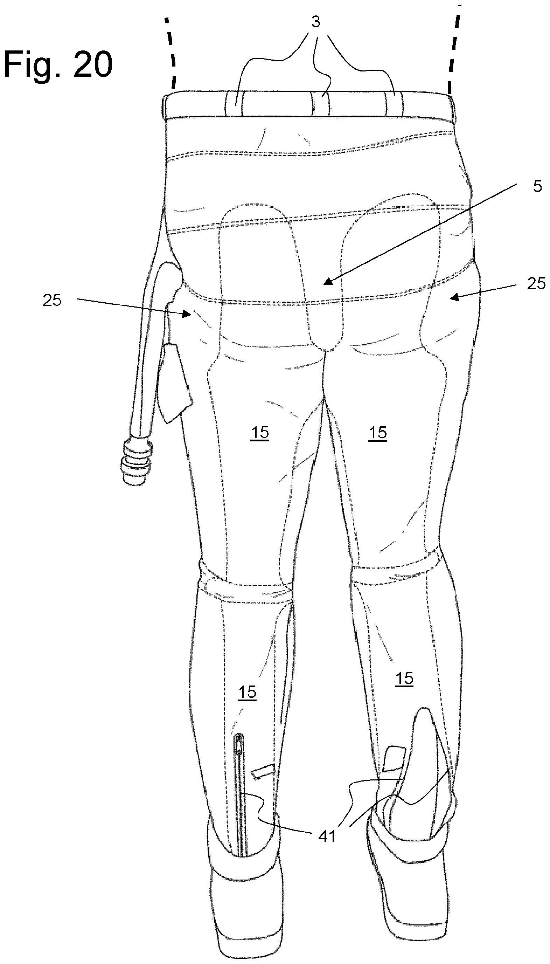

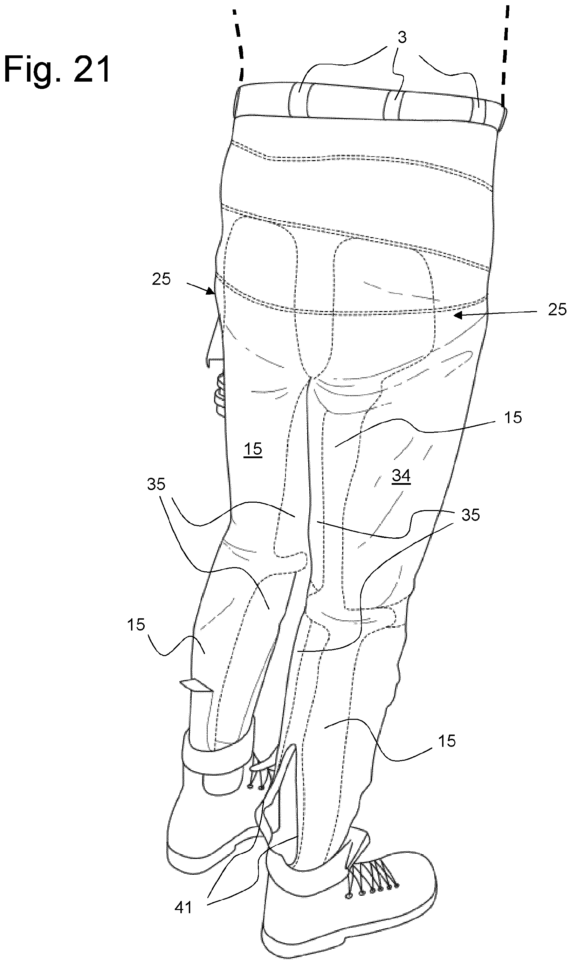

In Figur 20 zeigt die G-Schutzhose im schlaffen Zustand, jetzt mit der Aussenseite aussen und angezogen an einem Piloten, von hinten gesehen, mit Andeutung der Lage der inneren Komponenten. Hier sieht man die dünnen und luftdurchlässigen Textileinlagen 15 an der Rückseite der Hosenbeine und die beiden Fach-Bereiche 25, welche die äusseren Hälften der Gesässbacken des Piloten abdecken. Die Unterschenkel der Hosenbeine sind hier mit Reissverschlüssen 41 ausgestattet. Das Gleiche ist in Figur 21 noch in einer Ansicht von leicht schräg hinten gesehen dargestellt. Unterhalb des Hosenbundes 8 erkennt man darunter die beiden Gesässfächer 25 im Anschluss an die äusseren Fächer 34, welche Gesässfächer 25 etwa die äusseren Hälften der Gesässbacken des Piloten abdecken. Die Figuren 19 bis 21 zeigen die G-Schutzhose in der Ausführung, in der sie in den Stiefeln und unter einem Fliegerkombi getragen wird.

Es ist mit das besondere Ziel dieser G-Schutzhose, nicht für jeden Piloten ein massgeschneidertes Kleidungsstück zur Verfügung stellen zu müssen, sondern innerhalb einer Grössenklasse von Trägern mit einer einzigen G-Schutzhose auszukommen. Die Druckbeaufschlagung mittels dieser vorgestellten spezifischen, als Muskeln wirkenden Fächer dient auch diesem Zweck.

Das Hauptventil für die Pressluftversorgung ist zugleich ein Sicherheitsventil. Dieses schliesst die Fächer sofort von der Aussenwelt ab, sobald

- der Kabinendruck aus irgendeinem Grund zusammenbricht, oder

- die Druckversorgung durch das Flugzeug ausfällt.

In einem solchen Augenblick wirkt die G-Schutzhose wie ein Druckanzug und hält die Druckbedingungen innerhalb unkritischer Grenzen stabil. Über diese erfindungsgemässe G-Schutzhose können konventionelle, zugelassene Fliegerkombis (Overalls) getragen werden, allenfalls mit Zusatzfunktionen zum Schutz vor ABC-Einflüssen und/oder kaltem Wasser. Die G-Schutzhose kann ausserdem mit einem *Dry Air Cooling System* ausgerüstet sein für noch mehr Bequemlichkeit bei extrem heissen Klima-Bedingungen.

Dank des exklusiven, sehr gering dehnbaren Textilstoffes, der aber gleichzeitig sehr atmungsaktiv und luftdurchlässig ist, konnte die benötigte Luftmenge zum Druckaufbau mit dieser G-Schutzhose stark reduziert werden und entsprechend geht der Druckaufbau und Druckabbau weit schneller vonstatten als etwa für jede andere marktübliche G-Schutzhose. Diese G-Schutzhose ist erstmals so bequem anzuziehen wie eine gewöhnliche Jeanshose. Obwohl keine enge Anpassung an eine spezifische Körperkonstitution nötig ist, vermag diese G-Schutzhose bei bis zu zwei Kleidergrössen höher einen effektiven G-Schutz zu bieten. Es werden keinerlei Verschnürungen benötigt, um eine enge Passform am Körper zu erreichen. Trotzdem dass keine Verschnürungen, Laschen oder Schnallen zum individuellen Anpassen betätigt werden müssen, muss keine Druckminderung hingenommen werden und auch kein Zeitverlust beim Druckaufbau wegen sich sonst dehnender Schnürungen und Laschen für die Grössen-Adaptierung.

Diese G-Schutzhose vermag auch das Gesäss ohne einen dort in Kauf genommenen Luftkissen-Effekt mit Druck zu beaufschlagen, dank der durch die pneumatischen Muskeln erzeugten Spannung um den Gesässbereich. Der G-Schutz wird damit gegenüber jenem mit einer üblichen Vollbedrucks-G-Hose erzielten, die mit einer vollflächigen Bedruckung mit Blasen arbeitet, aber ohne Gesässbedruckung, erheblich gesteigert. Einzigartig ist auch die Tatsache, dass diese G-Schutzhose mit den Hosenbeinen in die Stiefel hinein gesteckt getragen werden kann, wie in Figur 20 und Figur 21 gezeigt. Dadurch können Fussschmerzen unter G-Last wirksam vermieden werden. Ein Rückschlagventil zwischen den Fächern 5, 13, 17, 18, 25, 34, 35 und der Aussenseite des G-Schutzhose kann eingebaut sein, welches bei einem plötzlichen Druckverlust im Flugzeug oder/und in der Cockpit-Atmosphäre schliesst und somit den Druck in den Fächern aufrechterhält. Ein weiteres eingebautes Ventil kann mittels eines Feuchtigkeitssensors durch Eintauchen in Wasser aktiviert werden sodass dann die Fächer ihren Luftinhalt behalten und entsprechend Auftrieb erzeugen.

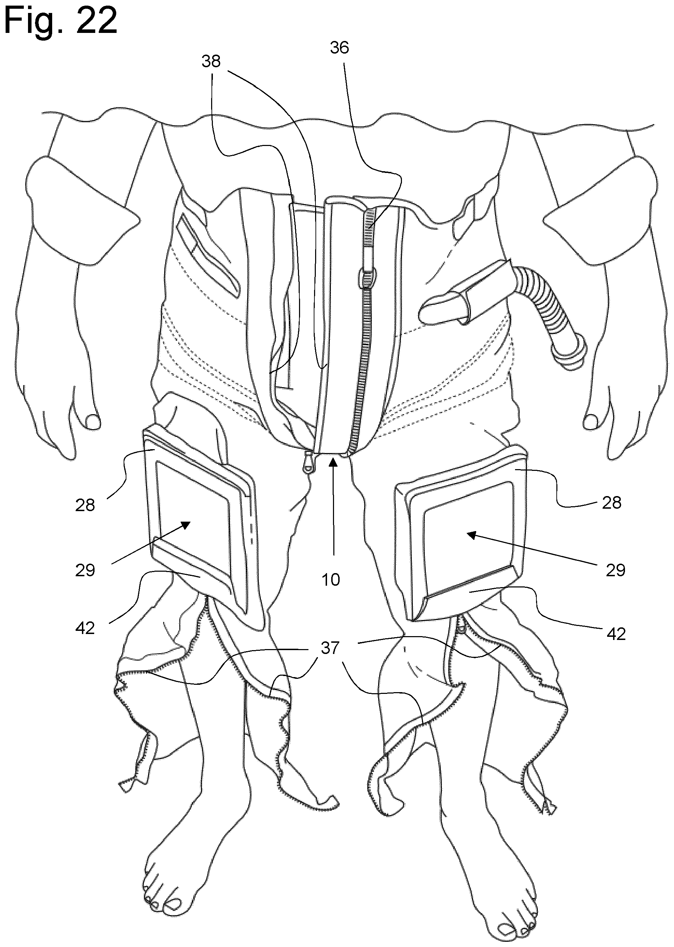

Eine ganz besonders interessante Ausführung dieser G-Schutzhose ist in den Figuren 22 bis 34 dargestellt. In diesem Beispiel wie in Figur 22 dargestellt wird die G-Schutzhose direkt auf dem Körper getragen, etwas, das zuvor nie möglich war, und wozu einzig eine gesondert angepasste, feuerfeste hauchdünne und luftdurchlässige textile Unterwäsche getragen wird. Auf den Oberschenkeln der Hosenbeine sind mittels Reissverschluss oder Klettverschluss Taschen 28 mit Sichtfenstern 29 und unteren mir Reissverschluss oder Klettverschluss verschliessbaren Klappen 42 längs ihren äusseren und oberen Seiten aufgenäht, während die anderen, die inneren und die unteren Seiten der Taschen, mittels Klettverschluss-Bändern an den Hosenbeinen anhaften. Reissverschlüsse 37 verlaufen vom unteren Rand der Hosenbeine aus auf ihrer Vorderseite nach oben, unter den aufgesetzten Taschen 28 hindurch bis fast hinauf auf die Höhe des Schrittes 10. Diese Anordnung der Reissverschlüsse 37 ist nur möglich, weil diese Bereiche auf der Vorder- und Rückseite der Hosenbeine keine Fächer bzw. Blasen einschliessen. Zum Anziehen wird der Primär-Reissverschluss 36 am Hosenbund geöffnet und in die Hose eingestiegen. Die weite Öffnung der Reissverschlüsse 37 längs der Hosenbeine erlaubt ein rasches An- und Ausziehen der G-Schutzhose. Sie bietet aber auch die Möglichkeit, dass der Träger die G-Schutzhose mitsamt seinem bereits angezogenen Fliegerkombi und mit seinen bereits angezogenen Fliegerstiefeln über die Fliegerstiefel und über das Fliegerkombi anziehen kann und am Schluss bloss noch den Primär-Reissverschluss 36 und die längs der Hosenbeine verlaufenden Reissverschlüsse 37 schliessen muss. Der zweite Reissverschluss 38 am Hosenbund dient zum Aufweiten der Taille, falls ein Pilot über die Zeit etwas an Bauchumfang zugelegt hat. Nach dem Schliessen der Reissverschlüsse 36, 37 ist die G-Schutzhose einsatzbereit zum Anschluss an die Druckluftversorgung im Cockpit. In umgekehrter Reihenfolge geht auch das Ausziehen sehr rasch vonstatten. Dieses Einsteigen in die Hose und wieder Aussteigen aus der Hose ist daher in wenigen Sekunden möglich, wie das noch nie, nicht einmal im entferntesten, mit einer anderen G-Schutzhose möglich war. Ein G-Schutzanzug war bisher nämlich stets aufwändig anzuziehen und niemals rasch an- und ausziehbar, und schon gar nicht wie eine Jeans über das Fliegerkombi und die Fliegerstiefel anziehbar.

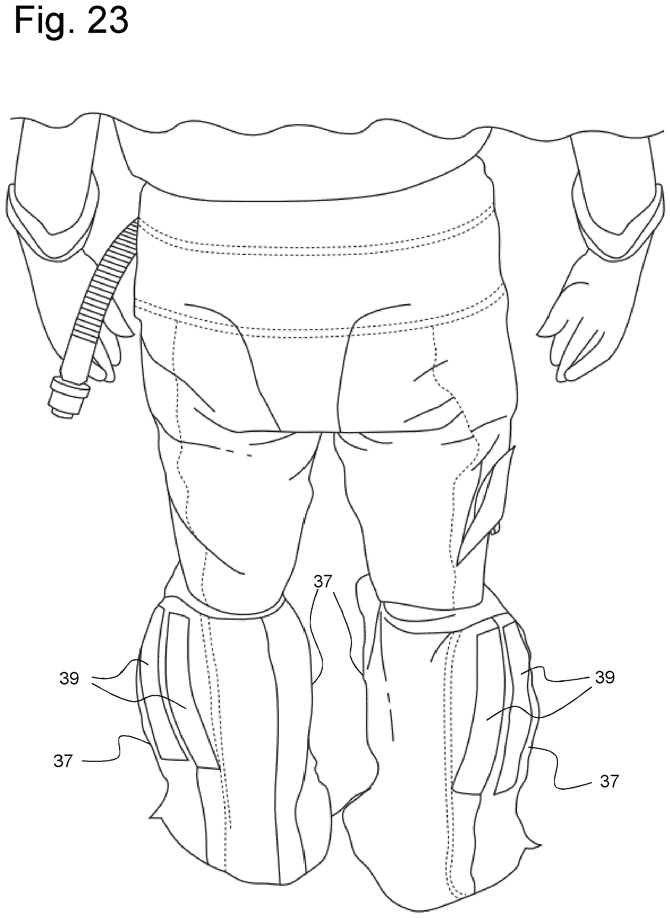

Die Figur 23 zeigt diese G-Schutzhose mit offenen Reissverschlüssen 37 längs der beiden Unterschenkel im angezogenen Zustand, von hinten gesehen. Seitlich an den Unterschenkeln der Hosenbeine erkennt man noch je zwei Klettband-Streifen 39, um dort bei Bedarf zusätzliche Taschen anheften zu können.

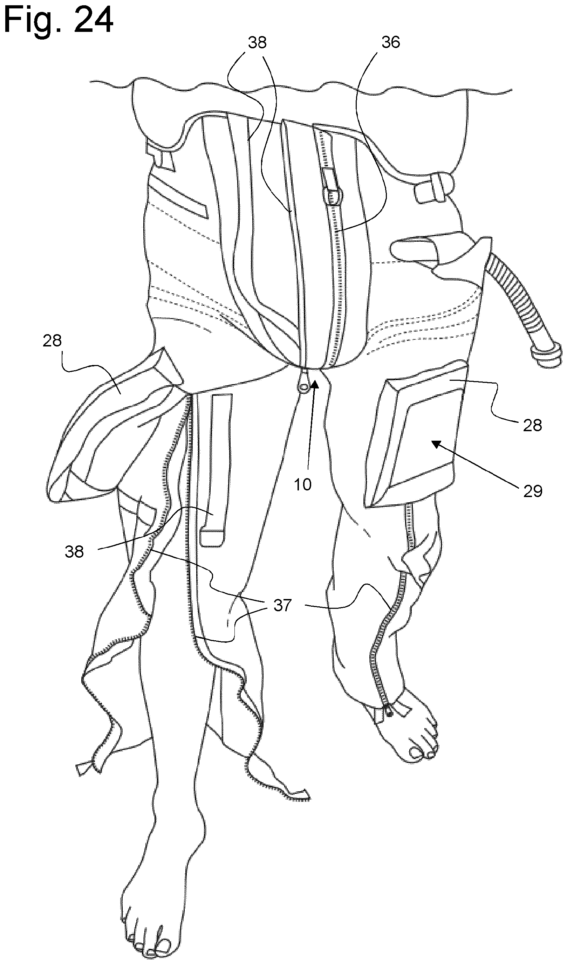

Die Figur 24 zeigt diese G-Schutzhose mit ganz geöffnetem Reissverschluss 37 am rechten Hosenbein, wenn getragen über dem nackten Körper bzw. Bein. Wie man sieht erstreckt sich der Reissverschluss 37 bis fast hinauf auf die Höhe des Schrittes 10 der G-Schutzhose. Zum Öffnen und Schliessen des Reissverschlusses 37 wird die darüberliegende Tasche 28 wie über dem rechten Oberschenkel gezeigt nach aussen weggeklappt und anschliessend wieder mittels ihrer Klettverschlüsse auf das Klettband 28 angedrückt. In einer zusätzlichen nicht abgebildeten Ausführung, die es ermöglicht, andere Taschen oder taktische Ausrüstungen auf dem Oberschenkel zu positionieren, ist der Reissverschluss 37 auf der Innenseite des Hosenbeins positioniert, bis fast hinauf auf die Höhe des Schrittes der G-Schutzhose.

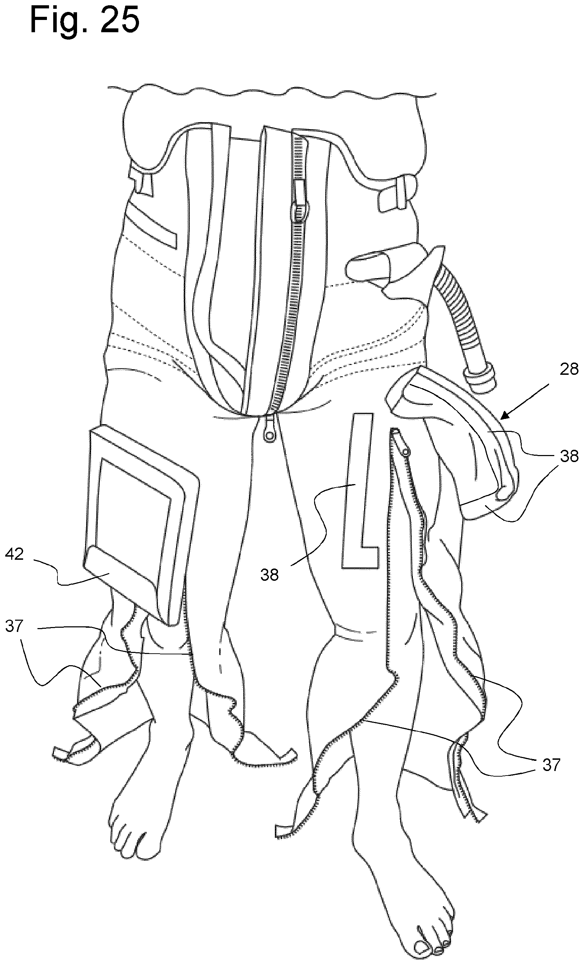

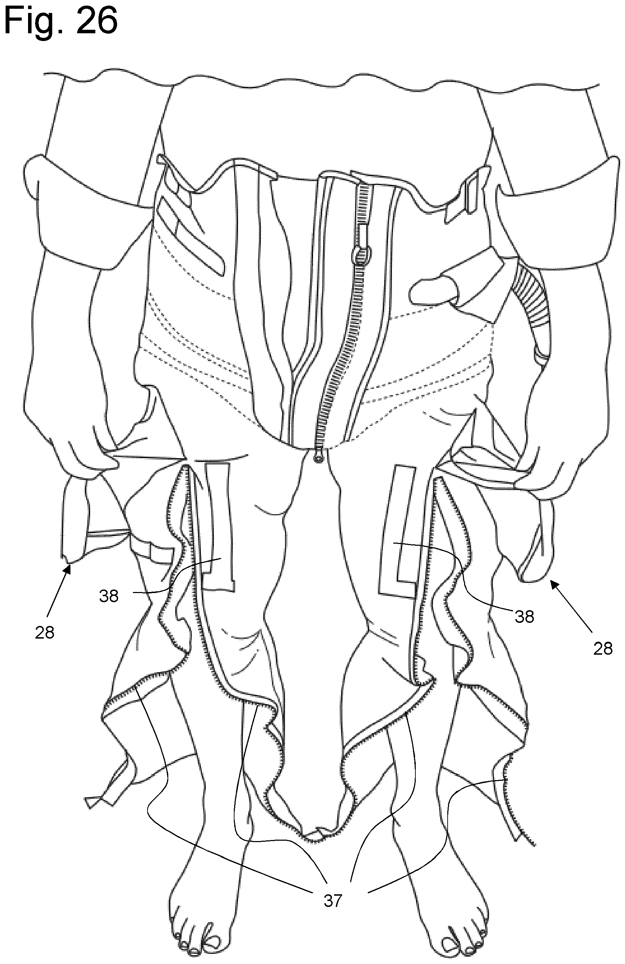

Die Figur 25 zeigt diese G-Schutzhose mit dem über dem linken Bein ganz geöffneten Reissverschluss 37 und nach aussen geklappter Tasche 28. Auf der Unterseite der Tasche 28 erkennt man die Klettbandstreifen 38, mit welchen die Tasche 28 bei geschlossenem Reissverschluss 37 wieder auf das Klettband 38 am Hosenbein aufpressbar ist. In Figur 26 ist diese G-Schutzhose mit nach aussen geklappten Taschen 28 und beiden Reissverschlüssen 37 auf der Beinvorderseite ganz geöffnet dargestellt.

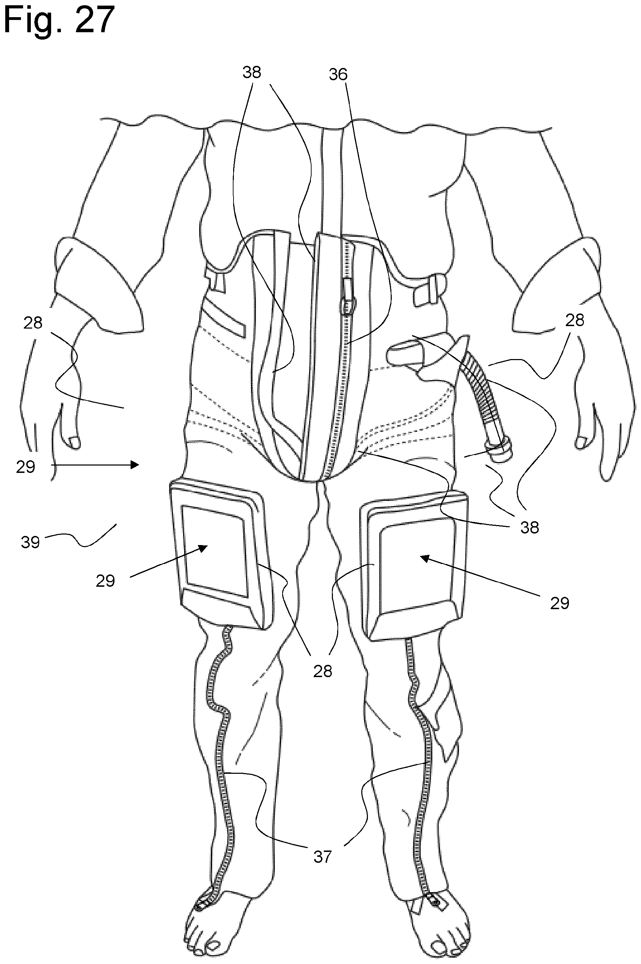

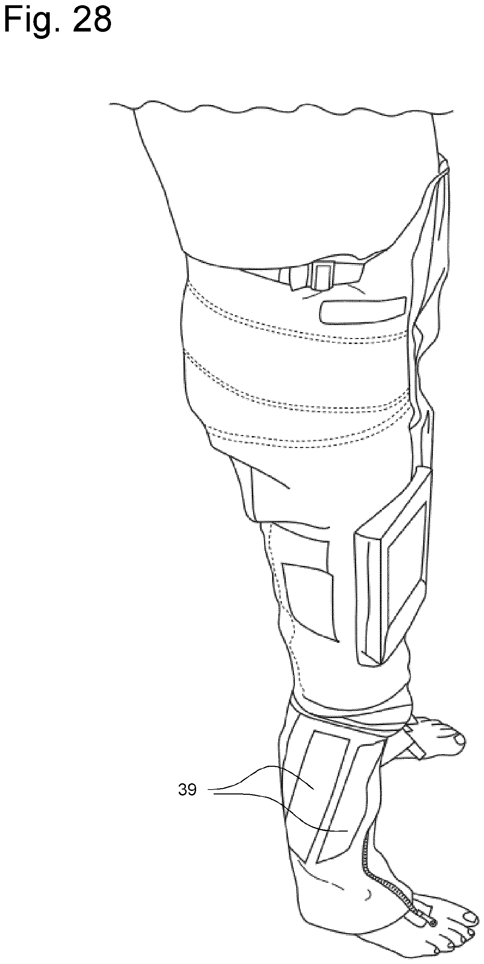

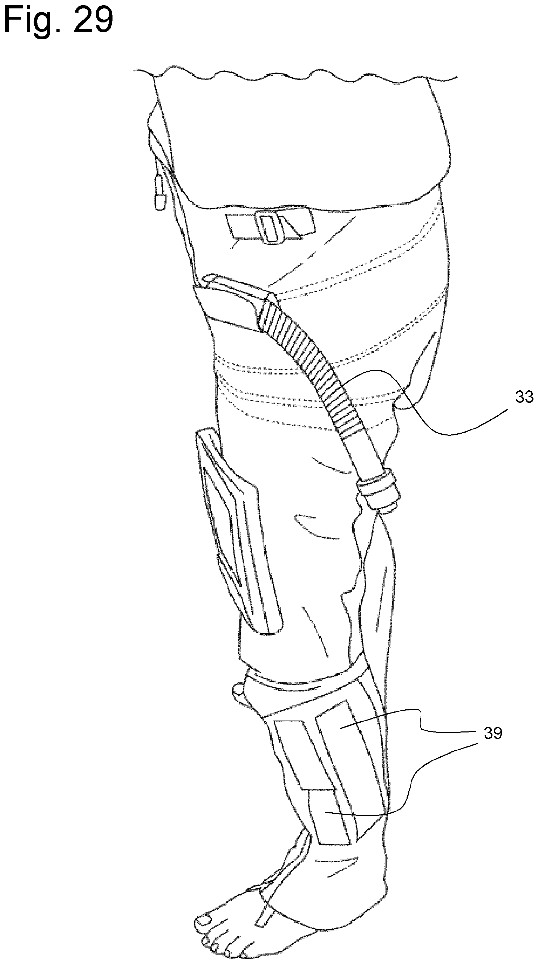

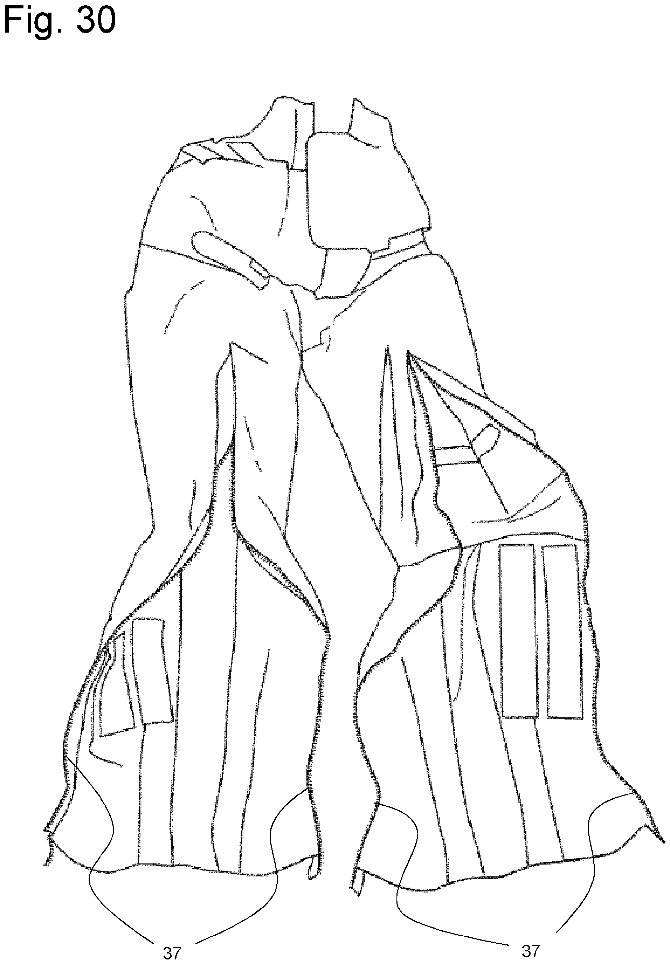

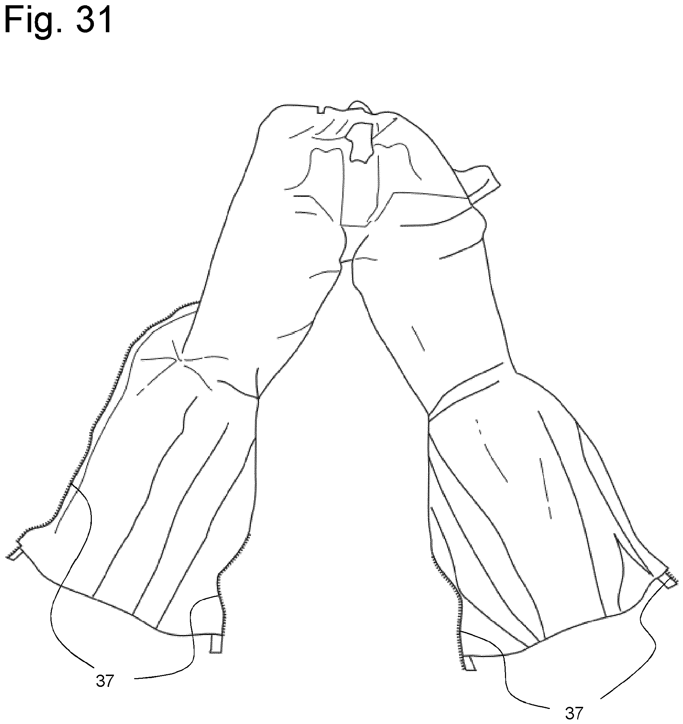

Die Figur 27 zeigt diese G-Schutzhose über dem blossen Körper getragen, mit geschlossenen Reissverschlüssen 37. Die Hosenbeine liegen satt und direkt an den Beinen an und die G-Schutzhose ist damit jederzeit bereit, in Aktion zu treten. Durch ihren engen, aber bequemen Schnitt, ihre Passform und ihren sehr luftdurchlässigen Stoff, im Gegensatz zu allen anderen sehr voluminösen G-Anzughosen und deren nicht luftdurchlässigen Stoffen kann sogar bei längeren Pausen oder Unterbrüchen am Boden ein Pilot diese G-Schutzhose komplett angezogen lassen, oder zusätzlich kann er noch die Reissverschlüsse 37 zum Kühlen öffnen, was den Tragkomfort der G-Schutzhose in Ruhepausen noch weiter erhöht. Sie wird dann vom Träger kaum mehr wahrgenommen. In Figur 28 ist dieselbe G-Schutzhose in einer Ansicht auf die rechte Seite gezeigt, und in Figur 29 in einer Ansicht auf die linke Seite gesehen. Hier erkennt man noch den Zufuhrschlauch 33 für die Druckluft. In Figur 30 ist diese G-Schutzhose mit geöffneten Reissverschlüssen 37 mit ihrer Rückseite lose auf dem Boden liegend dargestellt, und in Figur 31 sieht man diese G-Schutzhose mit geöffneten Reissverschlüssen 37 mit ihrer Vorderseite lose auf dem Boden liegend.

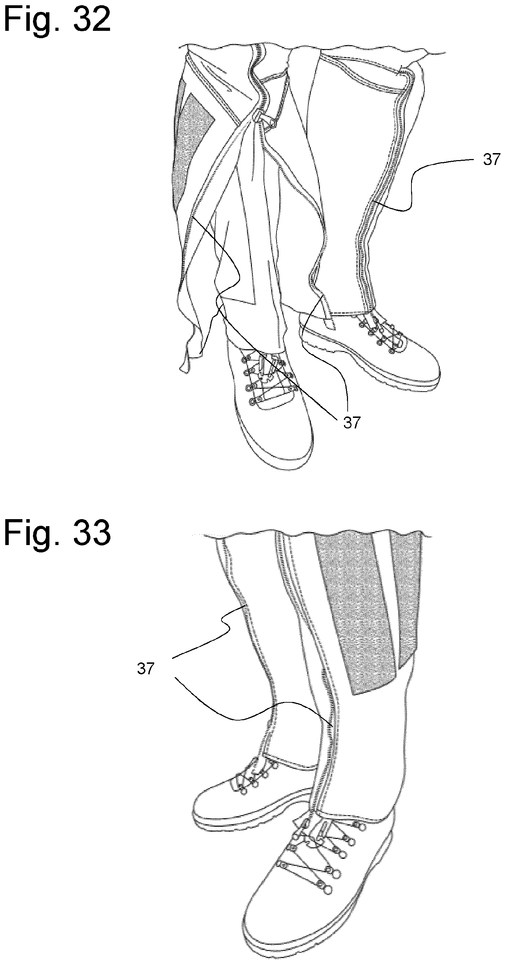

Zum Zeigen, dass diese G-Schutzhose auch über einem Fliegerkombi getragen werden kann, ist das in Figur 32 dargestellt. Der Reissverschluss 37 vor dem Unterschenkel des rechten Beines des Trägers ist hier geöffnet und gibt den Blick frei auf die Hose des darunter getragenen Fliegerkombis. In Figur 33 sieht man wie sich die G-Schutzhose über dem Fliegerkombi mit geschlossenen Reissverschlüssen 37 präsentiert.

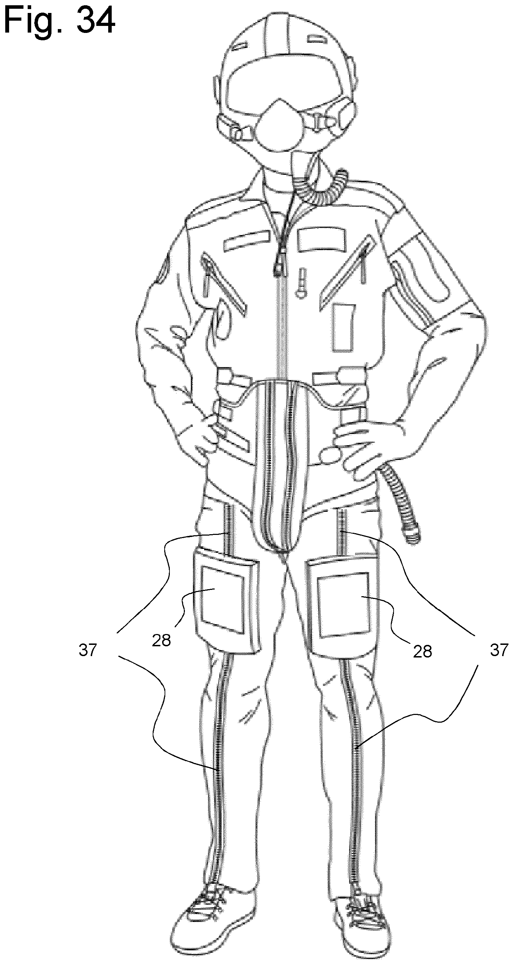

Schliesslich zeigt die Figur 34 die G-Schutzhose von einem Piloten in voller Montur getragen, nämlich über sein Fliegerkombi und über seine Fliegerstiefel, sodass also die Hosenbeine der G-Schutzhose wie jene einer Überfallhose auf den Schuhen oder Stiefeln enden. Die Reissverschlüsse 37 verlaufen hier auf der Frontseite der Hosenbeine von unten her, und sie könnten bis hinauf in die Leistengegend führen, wobei sie unter den Einstecktaschen 28 hindurch verlaufen, die zu diesem Zweck um eine Seite wegklappbar sind und mittels Klettverschlüssen in der hier gezeigten Position gehalten werden. Ein alternatives Hosen-Modell ist auch ohne feste Taschen umsetzbar, wobei dann die Taschen einzig mit Klett-Verschlüssen an der G-Schutzhose befestigt werden, womit der Pilot die Wahl der jeweils gerade gebrauchten Tasche an die tägliche Mission anpassen kann. Mit dieser G-Schutzhose ist der Pilot aus dem Zustand wie in Figur 34 gezeigt jederzeit bereit, die Flugzeugkanzel zu besteigen und für eine Operation zu starten und aufzusteigen.

Diese G-Schutzhose kann im Grundsatz also entweder unter einem Fliegerkombi und in den Stiefeln getragen werden, oder eben als Besonderheit über dem Fliegerkombi und über den Fliegerstiefeln, was für den Träger besonders bequem ist, denn dann kann er für operationelle Unterbrüche diese G-Schutzhose rasch ausziehen und bei Bedarf ebenso rasch wieder anziehen und sich für eine nächste Operation innert Sekunden bereitmachen. Wenn die G-Schutzhose direkt auf dem Körper getragen werden soll, mit bloss einer ganz leichten Unterwäsche, wird sie vorteilhaft etwas enger und körpergerechter geschnitten als für einen Einsatz über einem Fliegerkombi. Im letzteren Fall wird die G-Schutzhose relativ weit geschnitten, um den Stoffauftrag des Fliegerkombis zu kompensieren.

Was die Pflege dieser G-Schutzhose angeht, so ist zu erwähnen, dass sie sehr einfach zu waschen ist und somit leicht sauber gehalten werden kann. Sie kann in einer konventionellen Waschmaschine gewaschen werden. Der speziell leichte, bloss 121±5 Gramm/Quadratmeter wiegende Stoff erweist sich als schmutz- und fleckenabweisend und lässt sich deshalb sehr einfach waschen, selbst wenn er arg mit Öl oder Kerosin verschmutzt werden sollte. Die G-Schutzhose wie vorgestellt ist für den militärischen sowie zivilen Flugbetrieb geeignet, besonderes etwa für Akrobatikflüge. Sie ist sowohl für westliche wie auch östliche Flugzeugplattformen geeignet, das heisst für jede eingesetzte Flugzeugplattform. Einzig die Connectoren für die Druckbeaufschlagung müssen je nach Flugzeugplattform gewechselt bzw. angepasst werden.

**Ziffernverzeichnis**

| 1  | Fächer                      |
|----|-----------------------------|
| 2  | luftdichte Schicht          |
| 3  | Gurtschlaufen               |
| 4  | Hosenmaterial               |
| 5  | Steissbeinkanal             |
| 6  | Ecken des Faches            |
| 7  | Textilstreifen              |
| 8  | Hüftbund                    |
| 9  | Hosensäume                  |
| 10 | Schritt der Hose            |
| 11 | unterer Rand der Leiste     |
| 12 | äussere Seite der Hose      |
| 13 | sackartige Tasche als Blase |

14 Textilstücke auf der Vorderseite der Hosenbeine, frei von Fächern

15 Textilstücke auf der Rückseite der Hosenbeine, frei von Fächern

16 Kreuzbereich

17 Verbindungskanal

18 Leistenkanäle

19 Lippenöffnungen

20 Einbuchtung im Kniebereich

21 Belüftungsadern mit Lippenöffnung

22 Zufuhrschlauch

23 Pilotenhose

24 Raccord

25 Gesässfächer, welche die Gesässbacken-Hälfte abdecken

26 Blasen der 5 Blasen-G-Schutzhose

27 Schlauch für die Blasen 26

28 Oberschenkel Taschen

29 Sichtfenster in Oberschenkeltaschen

30 Blase in Voll-Deckungs G-Schutzhose

31 Spalte, von Blase 30 nicht bedeckt

32 seitliche Hüftbereiche

33 Druckschlauch Voll-Deckungs G-Schutzhose

34 Fächer für Aussenseite der Hosenbeine

35 Fächer für die Innenseite der Hosenbeine

36 Reissverschlüsse zum Schliessen des Hosenbundes

37 Reissverschluss längs des Hosenbeins

38 Zweiter Reissverschluss zum Erweitern der Taille der G-Schutzhose

39 Klettband-Streifen aussen an den Unterschenkeln der Hosenbeine

40 Aussparungen am konventionellen G-Schutzanzug

41 Reissverschlüsse hinten an den Unterschenkeln der Hosenbeine

42 mit Reissverschluss oder Klettverschluss verschliessbare Klappe an Tasche 28

**Patentansprüche**

1. Beschleunigungs-Schutzhose bzw. G-Schutzhose für Piloten von Flugzeugen, in denen hohe Beschleunigungen auftreten, wobei mindestens Teile der G-Schutzhose doppelwandig ausgeführt sind und damit auf der Innen- oder Aussenseite luftdichte Fächer (1; 5 13, 17, 18, 25, 34, 35) gebildet sind, die mit beschleunigungsabhängigen Luftdrucken beaufschlagbar sind, wobei die G-Schutzhose durchwegs aus einem luftdurchlässigen, reissfesten, feuerfesten und dehnungsarmen synthetischen Textilstoff besteht, und die G-Schutzhose stellenweise mit Fächern (1; 5 13, 17, 18, 25, 34, 35) ausgerüstet ist, die durch Aufpumpen über einen nach aussen führenden Schlauch (22) mit Raccord (24) zur Verbindung mit einer automatisch dosierbaren Druckluftversorgung in einen annähernd kreisrunden Querschnitt aufpumpbar sind, sodass diese Fächer als Muskeln wirken, indem ihre beiden entgegengesetzten Ränder zusammenziehbar sind und die angrenzenden Textilstoffstücke (14, 15) damit spannbar, **dadurch gekennzeichnet, dass** diese Fächer (34, 35) durchgehend längs der Innen- und Aussenseite der Hosenbeine verlaufen und am oberen Ende der Hosenbeine je über einen längs des unteren Bereichs (11) der Leisten verlaufenden Leistenkanal (18) verbunden sind, und sich die Fächer (34) auf den Aussenseiten der Hosenbeine von den Leisten aus weiter nach oben erstrecken und gegen den Unterbauch hin in je eine sackartige Blase (13) auslaufen, während sie auf der Hinterseite der Hose, im Bereich des Kreuzes (16) des Trägers miteinander über einen Verbindungskanal (17) kommunizieren und ab diesem ein Steissbeinkanal (5) nach unten abzweigt und sich zwischen die Gesäss-Backen des Trägers in Richtung des Schrittes erstreckt, wobei die Fächer (1; 5 13, 17, 18, 25, 34, 35) über mindestens einen Schlauch (22) mit Raccord (24) mit einer automatisch dosierbaren Druckluftversorgung kommunizieren.

2. Beschleunigungs-Schutzhose bzw. G-Schutzhose nach Anspruch 1, *dadurch gekennzeichnet,* **dass** die Fächer (1; 5 13, 17, 18, 25, 34, 35) innen mit einem luftdichten elastomeren Gummimaterial (2) dichtend ausgeschlagen sind, sodass sie in einen annähernd kreisrunden Querschnitt aufpumpbar sind und dann als Muskeln wirken, welche ihre beiden entgegengesetzten Ränder und damit die angrenzenden Textilstoffstücke (14, 15) zusammenziehen.

3. Beschleunigungs-Schutzhose bzw. G-Schutzhose nach Anspruch 1, *dadurch gekennzeichnet,* **dass** die Fächer (1; 5 13, 17, 18, 25, 34, 35) von einem elastisch dehnbaren losen, Elastomer-Luftschlauch durchzogen sind, durch den sie in einen annähernd kreisrunden Querschnitt aufpumpbar sind, sodass diese Fächer als Muskeln wirken, welche ihre beiden entgegengesetzten Ränder und damit die angrenzenden Textilstoffstücke (14, 15) zusammenziehen.

4. Beschleunigungs-Schutzhose bzw. G-Schutzhose nach einem der vorangehenden Ansprüche, *dadurch gekennzeichnet, dass* der Textilstoff aus vollsynthetischen, antistatischen, strapazierfähigen und dehnungsarmen Garn-Mischungen mit Aramid-Fasern mit einem Flächengewicht von höchstens 130 Gramm/m$^2$ bestehen, mit einer Luftdurchlässigkeit nach DIN EN ISO 9237 von bis 500 l/m$^2$ x s min und einer Reissfestigkeit nach ISO 13934-1 von bis 2000 N/5 cm.

5. Beschleunigungs-Schutzhose bzw. G-Schutzhose nach einem der vorangehenden Ansprüche, *da-*

*durch gekennzeichnet,* **dass** die Hosenbeine der G-Schutzhose auf der Vorderseite mit je einem Reissverschluss (37) versehen sind, der von unten nach oben öffnenbar und von oben nach unten schliessbar ist, sodass die beiden Hosenbeine bis annähernd zur Leistengegend öffnenbar sind und damit die G-Schutzhose bei geöffneten Reissverschlüssen (37) über ein Fliegerkombi und über die angezogenen Fliegerstiefel eines Trägers anziehbar und nach Schliessen der Reissverschlüsse (37) funktionsfähig tragbar ist und nach Öffnen der Reissverschlüsse (37) wieder über die Fliegerstiefel ausziehbar ist.

6. Beschleunigungs-Schutzhose bzw. G-Schutzhose nach einem der Ansprüche 1 bis 4, *dadurch gekennzeichnet,* **dass** die Hosenbeine der G-Schutzhose auf ihrer Innenseite mit je einem Reissverschluss (37) versehen sind, der von unten nach oben öffnenbar und von oben nach unten schliessbar ist, zum Freilassen der Vorderseite der Hosenbeine zum Positionieren von Taschen oder taktischen Ausrüstungen, sodass die beiden Hosenbeine von diesen Reissverschlüssen (37) bis annähernd zur Leistengegend öffnenbar sind und damit die G-Schutzhose bei geöffneten Reissverschlüssen (37) über ein Fliegerkombi und über die angezogenen Fliegerstiefel eines Trägers anziehbar und nach Schliessen der Reissverschlüsse (37) funktionsfähig tragbar ist und nach Öffnen der Reissverschlüsse (37) wieder über die Fliegerstiefel ausziehbar ist

7. Beschleunigungs-Schutzhose bzw. G-Schutzhose nach einem der vorangehenden Ansprüche, *dadurch gekennzeichnet,* **dass** sich je ein als kontrahierender Muskel wirkendes Fach (34) in Form eines Kanals von der Nähe des Hosenbundes (8) aus seitlich aussen bis hinunter zu den Hosensäumen (9) erstreckt, und je ein ebensolches Fach (35) sich längs der Innenseiten der Hosenbeine vom Schritt bis zu den Hosensäumen (9) erstreckt, und diese Fächer (25) oben über je einen Leistenkanal (18) mit den äusseren Fächern (34) verbunden sind, wobei auf der Vorderseite und der Rückseite der Hosenbeine einlagige, dünne und luftdurchlässige und durchgehende Textilstreifen (14, 15) freibleiben, wobei die vorderen Streifen (14) über ihre ganze Länge von je einem Reissverschluss (37) teilbar sind.

8. Beschleunigungs-Schutzhose bzw. G-Schutzhose nach einem der vorangehenden Ansprüche, *dadurch gekennzeichnet,* **dass** sich auf jeder Seite der Hose ein Gesässfach (25) vom seitlichen Hüftbereich aus horizontal längs des Hosenbundes (8) auf der Hinterseite gegen den Kreuzbereich (16) hin erstreckt, zur Überdeckung der äusseren Hälfte der beiden Gesässbacken des Trägers, und die beiden Gesässfächer (25) mit einem Verbindungskanal (17) verbunden sind, ab welchem von der Mitte der Hosenbund-Rückseite aus ein Steissbeinkanal (5) mit 2 cm bis 6 cm Breite sich um mindestens 20 cm nach abwärts erstreckt, zur Bedruckung des Gesässes, aber ohne gefährlichen «Luft Kissen Effekt» im Falle einer Schleudersitz-Betätigung.

9. Beschleunigungs-Schutzhose bzw. G-Schutzhose nach einem der vorangehenden Ansprüche, *dadurch gekennzeichnet,* **dass** die äusseren Fächer (34), die sich längs der äusseren Seiten der Hosenbeine erstrecken, auf Hüfthöhe sich in eine zur vorderen Mitte der Hose erstreckende sackartige Tasche als Blase (13) erstrecken, zur Bildung je einer Blase zur Beaufschlagung des Unterbauchs des Trägers im aufgeblasenen Zustand.

10. Beschleunigungs-Schutzhose bzw. G-Schutzhose nach einem der vorangehenden Ansprüche, *dadurch gekennzeichnet,* **dass** die aufpumpbaren Fächer (5, 13, 17, 18, 25, 34, 35) sich über die beiden äusseren Gesässbacken-Hälften der Hose, den Unterbauchbereich unterhalb des Hosenbundes (8) sowie längs der Aussen- und Innenseiten der Hosenbeine und die Leistengegend erstrecken.

11. Beschleunigungs-Schutzhose bzw. G-Schutzhose nach einem der vorangehenden Ansprüche, *dadurch gekennzeichnet,* **dass** die G-Schutzhose Belüftungsadern (21) aufweist, die längs der Fächer (1; 5 13, 17, 18, 25, 34, 35) auf jener Seite verlaufen, die dem Körper gegenüber zu liegen bestimmt ist, und dass diese Belüftungsadern (21) Löcher mit Schliesslippen (19) aufweisen, über welche Pressluft gefördert in das Innere der G-Schutzhose fein dosiert einströmbar ist, zur Kühlung der Körperoberfläche des Trägers der G-Schutzhose.

12. Beschleunigungs-Schutzhose bzw. G-Schutzhose nach einem der vorangehenden Ansprüche, *dadurch gekennzeichnet,* **dass** auf den Vorderseiten der Oberschenkel je eine Tasche (28) mit Sichtfenster (29) angebracht ist, indem diese Tasche (28) längs ihres äusseren und oberen Randes mit dem Hosenbein vernäht ist, während der untere und innere Rand einzig mittels Klettverschlüssen (38) am Hosenbein gehalten ist, sodass die Tasche (28) nach aussen umklappbar ist, zur Freigabe des unter ihr verlaufenden Reissverschlusses (37), und die Tasche (28) an ihrem unteren Rand mit einer Klappe (42) mit Reissverschluss oder Klettverschluss öffnenbar ist.

13. Beschleunigungs-Schutzhose bzw. G-Schutzhose nach einem der Ansprüche 1 bis 9, *dadurch gekennzeichnet,* **dass** auf den Vorderseiten der Oberschenkel je eine Tasche (28) mit Sichtfenster (29) angebracht ist, indem diese Tasche (28) einzig mittels Klettverschlüssen (38) am Hosenbein gehalten ist, und die Tasche (28) an ihrem unteren Rand mit einer Klappe (42) mit Reissverschluss oder Klettverschluss öffnenbar ist.

**Claims**

1. Acceleration-protective trousers resp. G-protective trousers for pilots of aircraft in which high accelerations occur, at least parts of the G-protective trousers being of double-walled design and thus airtight compartments (1; 5 13, 17, 18, 25, 34, 35) are formed on the inside or outside, which can be subjected to acceleration-dependent air pressures, the G-protective trousers consisting throughout of an air-permeable, tear-resistant, fire-resistant and low-stretch synthetic textile material, and the G-protective trousers being provided in places with compartments (1; 5 13, 17, 18, 25, 34, 35) which can be inflated into an approximately circular cross-section by inflation via an outwardly leading hose (22) with raccord (24) for connection to an automatically meterable compressed air supply, so that these compartments act as muscles in that their two opposite edges can be drawn together and the adjoining textile fabric pieces (14, 15) can be stretched therewith, **characterized in that**
the compartments (34, 35) extend continuously along the inner and outer sides of the trouser legs and are connected at the upper end of each trouser leg by a groin channel (18) extending along the lower region (11) of the groins, and the compartments (34) on the outer sides of the trouser legs extend further upwardly from the groins and terminate towards the lower abdomen in a respective bag-like bladder (13) while on the rear side of the trousers, in the region of the cross (16) of the wearer, they communicate with each other via a connecting channel (17) and from this a coccyx channel (5) branches off downwards and extends between the buttocks cheeks of the wearer in the direction of the crotch, the compartments (1; 5 13, 17, 18, 25, 34, 35) communicate via at least one hose (22) with raccord (24) with an automatically meterable compressed air supply.

2. Acceleration-protective trousers resp. G-protective trousers according to claim 1, **characterized in that** the compartments (1; 5 13, 17, 18, 25, 34, 35) are sealingly lined on the inside with an airtight elastomeric rubber material (2) so that they can be inflated into an approximately circular cross-section and then act as muscles which pull together their two opposite edges and thus the adjacent pieces of textile material (14, 15).

3. Acceleration-protective trousers resp. G-protective trousers according to claim 1, **characterized in that** the compartments (1; 5 13, 17, 18, 25, 34, 35) are traversed by an elastically expandable loose elastomeric air tube through which they can be inflated into an approximately circular cross-section, so that these compartments act as muscles which pull together their two opposite edges and thus the adjacent pieces of textile fabric (14, 15).

4. Acceleration protective trousers resp. G-protective trousers according to one of the preceding claims, **characterized in that** the textile fabric consists of fully synthetic, antistatic, hard-wearing and low-stretch yarn blends with aramid fibers having a weight per unit area of not more than 130 grams/m$^2$, with an air permeability according to DIN EN ISO 9237 of up to 500 l/m$^2$ x s min and a tear strength according to ISO 13934-1 of up to 2000 N/5 cm.

5. Acceleration protective trousers resp. G-protective trousers according to one of the preceding claims, **characterized in that** the trouser legs of the G-protective trousers are each provided on the front side with a zipper (37) which can be opened from bottom to top and closed from top to bottom, so that the two trouser legs can be opened up to approximately the groin area and so that the G-protective pants can be put on over a pilot's suit and over the donned pilot's boots of a wearer when the zippers (37) are open and can be worn functionally after closing the zippers (37) and can be taken off again over the pilot's boots after opening the zippers (37).

6. Acceleration protective trousers resp. G-protective pants according to one of the claims 1 to 4, **characterized in that** the trouser legs of the G-protective pants are each provided on their inner side with a zipper (37) which can be opened from the bottom to the top and closed from the top to the bottom, for leaving the front side of the trouser legs free for positioning pockets or tactical equipment, so that the two trouser legs can be opened from these zips (37) to approximately the groin area and so that the G-protective pants can be put on over an aviation suit and over the donned aviation boots of a wearer when the zips (37) are open and can be worn functionally after closing the zips (37) and can be taken off again over the aviation boots after opening the zips (37)

7. Acceleration protective trousers resp. G-protective trousers according to one of the preceding claims, **characterized in that** in each case a compartment (34) acting as a contracting muscle extends in the form of a channel from the vicinity of the waistband (8) laterally outwards down to the trouser hems (9), and in each case a similar compartment (35) extends along the inner sides of the trouser legs from the crotch down to the trouser hems (9), and these compartments (25) are each connected at the top to the outer compartments (34) via a respective last channel (18), single-layer, thin and air-permeable and continuous textile strips (14, 15) remaining free on the front and rear sides of the trouser legs, the front strips (14) being divisible over their entire length by a respective zip fastener (37).

8. Acceleration protective trousers resp. G-protective trousers according to one of the preceding claims, **characterized in that** on each side of the pants a seat compartment (25) extends from the lateral hip region horizontally along the waistband (8) on the rear side towards the cross region (16), for covering the outer half of the two buttocks of the wearer, and the two buttocks compartments (25) are connected with a connecting channel (17), from which a coccyx channel (5) with a width of 2 cm to 6 cm extends downwards from the center of the back of the waistband by at least 20 cm, for printing the buttocks, but without a dangerous "air cushion effect" in case of ejection seat actuation.

9. Acceleration-protective trousers resp.G-protective trousers according to one of the preceding claims, **characterized in that** the outer compartments (34) extending along the outer sides of the trouser legs extend at waist level into a bag-like pocket extending towards the front center of the pants as a bladder (13), for forming one bladder each for pressurizing the lower abdomen of the wearer in the inflated state.

10. Acceleration-protective trousers or G-protective trousers according to one of the preceding claims, **characterized in that** the inflatable compartments (5, 13, 17, 18, 25, 34, 35) extend over the two outer buttock halves of the pants, the lower abdominal region below the waistband (8) and along the outer and inner sides of the trouser legs and the groin region.

11. Acceleration protective trousers resp. G-protective trousers according to any of the preceding claims, **characterized in that** the G-protective trousers comprise ventilation veins (21) extending along the compartments (1; 5 13, 17, 18, 25, 34, 35) on that side which is intended to lie opposite the body, and **in that** these ventilation veins (21) have holes with closing lips (19), via which compressed air can flow into the interior of the G-protective trousers in a finely metered manner for cooling the body surface of the wearer of the G-protective trousers.

12. Acceleration protective trousers resp. G-protective trousers according to one of the preceding claims, **characterized in that** a pocket (28) with a viewing window (29) is provided on each of the front sides of the thighs, **in that** this pocket (28) is sewn to the trouser leg along its outer and upper edge while the lower and inner edges are held to the trouser leg solely by means of hook-and-loop fasteners (38), so that the pocket (28) can be folded down outwardly to release the zipper (37) extending underneath it, and the pocket (28) can be opened at its lower edge by means of a flap (42) with a zipper or hook-and-loop fastener.

13. Acceleration protective trousers resp. G-protective trousers according to one of the claims 1 to 9, **characterized in that** a pocket (28) with a viewing window (29) is provided on each of the front sides of the thighs, **in that** this pocket (28) is held on the trouser leg solely by means of Velcro fasteners (38), and the pocket (28) can be opened at its lower edge by means of a flap (42) with a zipper or Velcro fastener.

**Revendications**

1. Pantalon de protection contre les accélérations resp. pantalon de protection G pour pilotes d'avions dans lesquels se produisent de fortes accélérations, des parties au moins de la culotte de protection G étant réalisées à double paroi et des compartiments étanches à l'air (1 ; 5 13, 17, 18, 25, 34, 35) sont formées, qui peuvent être soumises à des pressions d'air dépendant de l'accélération, la culotte de protection G étant entièrement constituée d'un tissu textile synthétique perméable à l'air, résistant à la déchirure, ignifuge et peu extensible, et la culotte de protection G étant munie par endroits de compartiments (1 ; 5 13, 17, 18, 25, 34, 35) qui peuvent être gonflés par un tuyau flexible (22) menant vers l'extérieur et muni d'un raccord (24) pour le raccordement à une alimentation en air comprimé à dosage automatique, pour obtenir une section transversale approximativement circulaire, de sorte que ces compartiments agissent comme des muscles en ce que leurs deux bords opposés sont rétractables et que les pièces de tissu textile (14, 15) adjacentes peuvent ainsi être tendues,
**caractérisé en ce que**
ces compartiments (34, 35) s'étendent en continu le long des côtés intérieur et extérieur des jambes de pantalon et sont reliés à l'extrémité supérieure des jambes de pantalon chacun par un canal d'aine (18) s'étendant le long de la zone inférieure (11) des aines, et les compartiments (34) s'étendent sur les côtés extérieurs des jambes de pantalon à partir des aines plus loin vers le haut et se terminent vers le bas de l'abdomen chacun en une vessie (13) en forme de sac, tandis que sur la face arrière du pantalon, dans la zone de la croix (16) du porteur, elles communiquent entre elles par un canal de liaison (17) et à partir de celui-ci, un canal coccygien (5) bifurque vers le bas et s'étend entre les fesses du porteur en direction de l'entrejambe, les compartiments (1 ; 5 13, 17, 18, 25, 34, 35) communiquent par au moins un tuyau (22) avec raccord (24) avec une alimentation en air comprimé à dosage automatique.

2. Pantalon de protection contre les accélérations resp. pantalon de protection G selon la revendication 1, **caractérisée en ce que** les compartiments (1 ; 5 13, 17, 18, 25, 34, 35) sont garnis intérieurement de manière étanche d'un matériau en caoutchouc élastomère (2) étanche à l'air, de sorte qu'ils peuvent être gonflés en une section transversale approximativement circulaire et agissent alors comme des muscles qui contractent leurs deux bords opposés et donc les pièces de tissu (14, 15) adjacentes.

3. Pantalon de protection contre les accélérations resp. pantalon de protection G selon la revendication 1, **caractérisée en ce que** les compartiments (1 ; 5 13, 17, 18, 25, 34, 35) sont traversés par un tuyau d'air en élastomère lâche et élastiquement extensible, à travers lequel ils peuvent être gonflés en une section transversale approximativement circulaire, de sorte que ces compartiments agissent comme des muscles qui contractent leurs deux bords opposés et ainsi les pièces de tissu adjacentes (14, 15).

4. Pantalon de protection contre les accélérations resp. pantalon de protection G selon l'une des revendications précédentes, **caractérisé en ce que** le tissu textile est constitué de mélanges de fils entièrement synthétiques, antistatiques, résistants et peu extensibles avec des fibres d'aramide d'un poids par unité de surface de 130 grammes/m$^2$ au maximum, avec une perméabilité à l'air selon DIN EN ISO 9237 de 500 l/m$^2$ x s min au maximum et une résistance à la déchirure selon ISO 13934-1 de 2000 N/5 cm au maximum.

5. Pantalon de protection contre les accélérations resp. pantalon de protection G selon l'une des revendications précédentes, **caractérisé en ce que** les jambes de pantalon du pantalon de protection G sont munies chacune sur le devant d'une fermeture à glissière (37) qui peut être ouverte de bas en haut et fermée de haut en bas, de sorte que les deux jambes de pantalon peuvent être ouvertes approximativement jusqu'à l'aine et que le pantalon de protection G peut être enfilé, lorsque les fermetures à glissière (37) sont ouvertes, par-dessus une combinaison d'aviation et par-dessus les bottes d'aviation chaussées d'un porteur et peut être porté de manière fonctionnelle après la fermeture des fermetures à glissière (37) et peut être à nouveau retiré par-dessus les bottes d'aviation après l'ouverture des fermetures à glissière (37).

6. Pantalon de protection contre les accélérations resp. pantalon de protection G selon l'une des revendications 1 à 4, **caractérisé en ce que** les jambes de pantalon du pantalon de protection G sont munies chacune sur leur côté intérieur d'une fermeture à glissière (37) qui peut être ouverte de bas en haut et fermée de haut en bas, pour laisser libre le côté avant des jambes de pantalon pour le positionnement de poches ou d'équipements tactiques, de sorte que les deux jambes de pantalon peuvent être ouvertes par ces fermetures à glissière (37) jusqu'à proximité de l'aine et que le pantalon de protection G peut être enfilé, lorsque les fermetures à glissière (37) sont ouvertes, par-dessus une combinaison d'aviation et par-dessus les bottes d'aviation chaussées d'un porteur et peut être porté de manière fonctionnelle après la fermeture des fermetures à glissière (37) et peut être à nouveau retiré par-dessus les bottes d'aviation après l'ouverture des fermetures à glissière (37).

7. Pantalon de protection contre les accélérations resp. pantalon de protection G selon l'une des revendications précédentes, **caractérisée en ce qu'**un compartiment (34) agissant comme un muscle contractant s'étend latéralement vers l'extérieur depuis la proximité de la ceinture de la culotte (8) jusqu'aux ourlets de la culotte (9), et **en ce qu'**un compartiment (35) de même type s'étend le long des côtés intérieurs des jambes de la culotte depuis l'entrejambe jusqu'aux ourlets de la culotte (9), et ces compartiments (25) sont reliés en haut par un canal (18) aux compartiments extérieurs (34), des bandes textiles (14, 15) continues, minces et perméables à l'air, à une seule couche, restant libres sur le devant et le dos des jambes de pantalon, les bandes avant (14) pouvant être divisées sur toute leur longueur par une fermeture à glissière (37).

8. Pantalon de protection contre les accélérations resp. pantalon de protection G selon l'une des revendications précédentes, **caractérisée en ce que**, de chaque côté de la culotte, un compartiment fessier (25) s'étend horizontalement à partir de la zone latérale des hanches le long de la ceinture de la culotte (8) sur le côté arrière vers la zone croisée (16), pour recouvrir la moitié extérieure des deux fesses du porteur, et les deux compartiments fessiers (25) sont reliés par un canal de liaison (17) à partir duquel un canal coccygien (5) d'une largeur de 2 cm à 6 cm s'étend vers le bas sur au moins 20 cm à partir du milieu de la face arrière de la ceinture de pantalon, pour imprimer le fessier, mais sans effet dangereux de "coussin d'air" en cas d'actionnement du siège éjectable.

9. Pantalon de protection contre les accélérations resp. pantalon de protection G selon l'une des revendications précédentes, **caractérisée en ce que** les compartiments extérieurs (34), qui s'étendent le long des côtés extérieurs des jambes de la culotte, s'étendent au niveau des hanches dans une poche en forme de sac s'étendant vers le milieu avant de la culotte, sous forme de vessie (13), pour former chacun une vessie destinée à gonfler le bas-ventre du porteur à l'état gonflé.

10. Pantalon de protection contre les accélérations resp. pantalon de protection G selon l'une des revendications précédentes, **caractérisée en ce que** les compartiments gonflables (5, 13, 17, 18, 25, 34, 35) s'étendent sur les deux moitiés extérieures des fesses de la culotte, sur la zone du bas-ventre en dessous de la ceinture de la culotte (8) ainsi que le long des côtés extérieurs et intérieurs des jambes de la culotte et sur la zone de l'aine.

11. Pantalon de protection contre les accélérations resp. pantalon de protection G selon l'une des revendications précédentes, **caractérisée en ce que** la culotte de protection G présente des veines d'aération (21) qui s'étendent le long des compartiments (1 ; 5 13, 17, 18, 25, 34, 35) s'étendent sur le côté qui est destiné à faire face au corps, et **en ce que** ces veines d'aération (21) présentent des trous avec des lèvres de fermeture (19) par lesquelles de l'air comprimé transporté peut être introduit de manière finement dosée à l'intérieur du pantalon de protection G, pour refroidir la surface du corps du porteur du pantalon de protection G.

12. Pantalon de protection contre les accélérations resp. pantalon de protection G selon l'une des revendications précédentes, **caractérisée en ce qu'**une poche (28) avec fenêtre (29) est placée sur la face avant de chaque cuisse, cette poche (28) étant cousue à la jambe de culotte le long de son bord extérieur et de son bord supérieur, tandis que le bord inférieur et le bord intérieur sont maintenus à la jambe du pantalon uniquement au moyen de fermetures velcro (38), de sorte que la poche (28) peut être rabattue vers l'extérieur pour libérer la fermeture à glissière (37) qui s'étend sous elle, et que la poche (28) peut être ouverte à son bord inférieur au moyen d'un rabat (42) à fermeture à glissière ou à fermeture velcro.

13. Pantalon de protection contre les accélérations resp. pantalon de protection G selon l'une des revendications 1 à 9, **caractérisé en ce qu'**une poche (28) avec fenêtre (29) est placée sur le devant de chaque cuisse, **en ce que** cette poche (28) est maintenue sur la jambe du pantalon uniquement au moyen de fermetures velcro (38), et **en ce que** la poche (28) peut être ouverte sur son bord inférieur par un rabat (42) avec fermeture à glissière ou fermeture velcro.

# Fig. 1

# Fig. 2

# Fig. 3

28

29

28

29

Fig. 4

Fig. 5

Fig. 6

Fig. 7

Fig. 8

## Fig. 9

## Fig. 10

## Fig. 11

Fig. 12

# Fig. 13

# Fig. 14

Fig. 15

# Fig. 16

Fig. 17

Fig. 18

Fig. 19

Fig. 20

Fig. 21

3

25

25

15

15

34

35

35

15

15

41

# Fig. 22

# Fig. 23

# Fig. 24

# Fig. 25

# Fig. 26

# Fig. 27

# Fig. 28

39

# Fig. 29

## Fig. 30

37  37

## Fig. 31

37

37

Fig. 32

37

37

Fig. 33

37

# Fig. 34

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1755948 A
- US 20070289050 A
- JP 2008012958 B
- DE 102007053236
- WO 2012066114 A1

- EP 2640637 A
- US 2008275291 A
- WO 2005123504 A
- DE 102007053236 A1